# EUROPEAN PATENT SPECIFICATION

(11) **EP 3 573 362 B1**
(45) Date of publication and mention of the grant of the patent: **06.09.2023**
(21) Application number: 17893227.3
(22) Date of filing: 15.12.2017
(51) Int. Cl.: H04W 74/00, H04W 72/044

(54) **BASE STATION, TERMINAL APPARATUS, AND METHOD**
BASISSTATION, ENDGERÄTEVORRICHTUNG UND VERFAHREN
STATION DE BASE, DISPOSITIF TERMINAL ET PROCÉDÉ

(30) Priority: 17.01.2017 JP 2017005635
(43) Date of publication of application: 27.11.2019
(73) Proprietor: NEC Corporation, Tokyo 108-8001 (JP)
(72) Inventor: OHAMA, Toshiki, Tokyo 108-8001 (JP); SASAKI, Shizen, Tokyo 108-8001 (JP)
(74) Representative: MacDougall, Alan John Shaw
(86) International application number: PCT/JP2017/045093
(87) International publication number: WO 2018/135199

(56) References cited:
- WO-A1-2016/024770
- WO-A1-2016/086144
- WO-A1-2016/086144
- US-A1- 2011 150 004
- 3GPP: '3rd Generation Partnership Project; Technical Specification Group Radio Access Network; Evolved Universal Terrestrial Radio Access (E-UTRA); Medium Access Control (MAC) protocol specification (Release 14)' 3GPP TS 36.321 V14.1.0 30 December 2016, XP055511791

## Description

### BACKGROUND

### Technical Field

The present invention relates to a base station, a terminal apparatus, and methods related to transmission and/or reception of data via a radio access network.

### Background Art

Third Generation Partnership Project (3GPP) has been making efforts to standardize a fifth generation mobile communication system (5G). A new Radio Access Technology (RAT) for implementation of 5G is referred to as New Radio (NR), NEW RAT, or the like.

NR assumes that a high frequency band of several tens of GHz is newly used for radio communication. As a method for compensating for high propagation loss occurring in such a high frequency band to provide desired coverage, beamforming has been studied that is a technology using a large number of antenna elements to form transmit and/or receive beams to improve directive gain. For NR, specifications have been formulated premised on the use of beamforming.

To maximize utilization of the directive gain of beamforming, it is desirable to form transmit beams on a transmission side in such a manner as to achieve the best reception quality on a reception side. Here, the reception quality on the reception side depends on factors specific to the reception side such as a relative positional relationship between the transmission side and the reception side, formable receive beam patterns, and presence of an interference source. Thus, the transmit beams on the transmission side are desirably determined based on feedback information obtained by measuring reception quality and the like of a plurality of candidate transmit beams and fed back by the reception side.

Moreover, in a case where beamforming is used for communication between one base station and one terminal apparatus, downlink transmit beams from the base station and uplink transmit beams from the terminal apparatus may be used as the transmit beams. For NR, selection from these transmit beams during a random access procedure has been studied.

The random access procedure is used for initial access to the base station by the terminal apparatus, handover, uplink resynchronization, and the like, and includes a step in which the terminal apparatus transmits a random access preamble to the base station (step 1) and a step in which the base station transmits a random access response (step 2).

For example, NPL 1 and NPL 2 describe an uplink-transmit-beam determining method for NR, the method including first transmitting, by the terminal apparatus, a plurality of random access preambles by using a plurality of uplink transmit beams and then feeding back, by the base station in a random access response, information related to the uplink transmit beams detected by the base station to the terminal apparatus.

Note that specific steps of the random access procedure for NR are being studied. Specifically, for NR, various agreements have been reached premised on a random access procedure similar to the random access procedures specified in known Long-Term Evolution (LTE), LTE-Advanced, and LTE-Advanced Pro (hereinafter referred to as "LTE and evolved forms of LTE") (see, for example, NPL 3).

### Citation List

### Non Patent Literature

[NPL 1] NTT DOCOMO, INC. "Views on random access procedure for NR", 3GPP TSG RAN WG1 Meeting #87. Reno, USA 14th-18th November 2016. R1-1612709
[NPL 2] Samsung. "Random Access Procedure in NR", 3GPP TSG RAN WG2 #96. Reno, USA November 14-18, 2016. R2-167568
[NPL 3] 3GPP, "3GPP TS36.321 v13.3.0," Sep. 2016
US 2011/150004 A1 discloses a transmitting apparatus, a receiving apparatus, a system and a method of performing multi-user transmission to a plurality of other transmission ends, wherein a request for transmission is broadcast to said plurality of other transmission ends, and the request is provided with a Medium Access Control MAC frame which includes a list of at least two identifications of receiving ends which are requested to reply to the request.
WO 2016/086144 A1 discloses methods, devices and systems for performing a random access (RA) procedure. A wireless transmit/receive unit may be configured to receive a plurality of RA resource sets, where each of the plurality of RA resource sets is associated with a node-B directional beam, select multiple RA resource sets from among the plurality of RA resource sets based on the node-B directional beams, and initiate an RA procedure based on the selected multiple RA resource sets. The RA procedure may include selecting multiple preambles, each corresponding to one of the selected multiple RA resource sets. The WTRU may be configured to sequentially transmit the selected multiple preambles in sequential RA transmissions, and may be configured to receive, from a node-B, in response to the RA transmissions, at least one RA response (RAR), where each of the received at least one RAR corresponds to one of the transmitted multiple preambles.

### SUMMARY

NPL 1 and NPL 2 describe feedback of information (beam related information) related to beams from the base station to the terminal apparatus by using the random access response. However, NPL 1 and NPL 2 fail to sufficiently discuss a specific manner of configuring a Medium Access Control Protocol Data Unit (MAC PDU) in order to transmit the beam related information in downlink by using the random access response.

The present invention is set out in the appended independent claims. Optional features are set out in the appended dependent claims. In the following, any examples and embodiments not falling within the scope of the claims do not form part of the invention and are provided for illustrative purposes only.

A base station according to an example includes: an obtaining section configured to obtain a Medium Access Control (MAC) Protocol Data Unit (PDU); and a transmission processing section configured to transmit the MAC PDU in downlink, wherein the MAC PDU includes a plurality of identifiers and beam related information corresponding to each of one or more identifiers included in the plurality of identifiers and does not include beam related information corresponding to another identifier included in the plurality of identifiers.

A terminal apparatus according to another example includes: a reception processing section configured to receive a Medium Access Control (MAC) Protocol Data Unit (PDU) in downlink; and an obtaining section configured to obtain information included in the MAC PDU, wherein the MAC PDU includes a plurality of identifiers and beam related information corresponding to each of one or more identifiers included in the plurality of identifiers and does not include beam related information corresponding to another identifier included in the plurality of identifiers, and the obtaining section is configured to obtain beam related information corresponding to an identifier used for the terminal apparatus out of the plurality of identifiers.

A first method according to another example includes: obtaining a Medium Access Control (MAC) Protocol Data Unit (PDU); and transmitting the MAC PDU in downlink, wherein the MAC PDU includes a plurality of identifiers and beam related information corresponding to each of one or more identifiers included in the plurality of identifiers and does not include beam related information corresponding to another identifier included in the plurality of identifiers.

A second method according to another example method includes: receiving a Medium Access Control (MAC) Protocol Data Unit (PDU) in downlink; and obtaining information included in the MAC PDU, wherein the MAC PDU includes a plurality of identifiers and beam related information corresponding to each of one or more identifiers included in the plurality of identifiers and does not include beam related information corresponding to another identifier included in the plurality of identifiers, and beam related information corresponding to an identifier used for the terminal apparatus is obtained out of the plurality of identifiers.

A first program according to another example causes a processor to: obtain a Medium Access Control (MAC) Protocol Data Unit (PDU); and transmit the MAC PDU in downlink, wherein the MAC PDU includes a plurality of identifiers and beam related information corresponding to each of one or more identifiers included in the plurality of identifiers and does not include beam related information corresponding to another identifier included in the plurality of identifiers.

A second program according to another example causes a processor to: receive a Medium Access Control (MAC) Protocol Data Unit (PDU) in downlink; and obtain information included in the MAC PDU, wherein the MAC PDU includes a plurality of identifiers and beam related information corresponding to each of one or more identifiers included in the plurality of identifiers and does not include beam related information corresponding to another identifier included in the plurality of identifiers, and beam related information corresponding to an identifier used for a terminal apparatus is obtained out of the plurality of identifiers.

A first recording medium according to another example is a non-transitory computer-readable recording medium having recorded thereon a program causing a processor to: obtain a Medium Access Control (MAC) Protocol Data
Unit (PDU); and transmit the MAC PDU in downlink, wherein the MAC PDU includes a plurality of identifiers and beam related information corresponding to each of one or more identifiers included in the plurality of identifiers and does not include beam related information corresponding to another identifier included in the plurality of identifiers.

A second recording medium according to another example is a non-transitory computer-readable recording medium having recorded thereon a program causing a processor to: receive a Medium Access Control (MAC) Protocol Data Unit (PDU) in downlink; and obtain information included in the MAC PDU, wherein the MAC PDU includes a plurality of identifiers and beam related information corresponding to each of one or more identifiers included in the plurality of identifiers and does not include beam related information corresponding to another identifier included in the plurality of identifiers, and beam related information corresponding to an identifier used for a terminal apparatus is obtained out of the plurality of identifiers.

### Advantageous Effects of Invention

According to the present invention, the beam related information can be transmitted in downlink with the use of radio resources being reduced. Note that, according to the present invention, instead of or together with the above effect, other effects may be exerted.

### BRIEF DESCRIPTION OF THE DRAWINGS

Fig. 1 is a diagram illustrating an example of a configuration of a MAC PDU for random access responses;
Fig. 2 is a diagram illustrating a format of a BI subheader;
Fig. 3 is a diagram illustrating a format of a RAPID subheader;
Fig. 4 is an explanatory diagram illustrating an example of a schematic configuration of a system 1 according to example embodiments of the present invention;
Fig. 5 is a block diagram illustrating an example of a schematic configuration of a base station 100 according to a first example embodiment;
Fig. 6 is a block diagram illustrating an example of a schematic configuration of a terminal apparatus 200 according to the first example embodiment;
Fig. 7 is a diagram illustrating a format of the BI subheader according to Example 1;
Fig. 8 is a diagram illustrating a format of a UTBI subheader according to Example 1;
Fig. 9 is a diagram illustrating an example of a configuration of a MAC header in which MAC subheaders are identified using a "T" field and a "T2" field;
Fig. 10 is a diagram illustrating an entire configuration of a MAC PDU corresponding to the example of the configuration of the MAC header illustrated in Fig. 9;
Fig. 11 is a diagram illustrating another example of the configuration of the MAC PDU according to Example 1;
Fig. 12 is a diagram illustrating an example of a configuration of fields of the MAC PDU according to Example 1;
Fig. 13 is a diagram illustrating an example of the configuration of the fields of the MAC PDU according to Example 1;
Fig. 14 is a diagram illustrating an example of the configuration of the fields of the MAC PDU according to Reference Example;
Fig. 15 is a diagram illustrating a format of a UTBI subheader according to Example 2;
Fig. 16 is a diagram illustrating an example of a configuration of a MAC header in which MAC subheaders are identified using a "T" field and an ordinal position of each of the MAC subheaders;
Fig. 17 is a diagram illustrating an entire configuration of a MAC PDU corresponding to the example of the configuration of the MAC header illustrated in Fig. 16;
Fig. 18 is a diagram illustrating another example of the configuration of the MAC header in which the MAC subheaders are identified using the "T" field and the ordinal position of each MAC subheader;
Fig. 19 is a diagram illustrating an example of the configuration of the fields of the MAC PDU according to Example 2;
Fig. 20 is a diagram illustrating an example of the configuration of the fields of the MAC PDU according to Example 2;
Fig. 21 is a diagram illustrating an example of the configuration of the fields of the MAC PDU according to Reference Example;
Fig. 22 is a flowchart for describing an example of a schematic flow of processing in a base station 100;
Fig. 23 is a flowchart for describing an example of a schematic flow of MAC PDU reception processing according to Example 1;
Fig. 24 is a flowchart for describing an example of a schematic flow of MAC PDU reception processing according to Example 2;
Fig. 25 is a block diagram illustrating an example of a schematic configuration of the base station 100 according to a second example embodiment; and
Fig. 26 is a block diagram illustrating an example of a schematic configuration of the terminal apparatus 200 according to the second example embodiment.

### DESCRIPTION OF THE EXAMPLE EMBODIMENTS

Hereinafter, example embodiments of the present invention will be described in detail with reference to the accompanying drawings. Note that, in the Specification and drawings, elements to which the similar descriptions are applicable are denoted by the same reference signs, and overlapping descriptions may hence be omitted.

Descriptions will be given in the following order.
1. Related Art
2. Overview of Example Embodiments of the Present Invention
3. Configuration of System according to Example Embodiments of the Present Invention
4. First Example Embodiment
   4.1. Configuration of Base Station
   4.2. Configuration of Terminal Apparatus
   4.3. Technical Features
   4.4. Examples
5. Second Example Embodiment
   5.1. Configuration of Base Station
   5.2. Configuration of Terminal Apparatus
   5.3. Technical Features
6. Other Example Embodiments

### < < 1. Related Art>>

As a technology related to the present example embodiments, beamforming assumed by 3GPP and a random access procedure in LTE and evolved forms of LTE will be described.

Third Generation Partnership Project (3GPP) has been making efforts to standardize a fifth generation mobile communication system (5G). A new Radio Access Technology (RAT) for implementation of 5G is referred to as New Radio (NR), NEW RAT, or the like.

NR assumes that a high frequency band of several tens of GHz is newly used for radio communication. As a method for compensating for high propagation loss occurring in such a high frequency band to provide desired coverage, beamforming has been studied that is a technology using a large number of antenna elements to form transmit and/or receive beams to improve directive gain. For NR, specifications have been formulated premised on the use of beamforming.

To maximize utilization of the directive gain of beamforming, it is desirable to form transmit beams on a transmission side in such a manner as to achieve the best reception quality on a reception side. Here, the reception quality on the reception side depends on factors specific to the reception side such as a relative positional relationship between the transmission side and the reception side, formable receive beam patterns, and presence of an interference source. Thus, the transmit beams on the transmission side are desirably determined based on feedback information obtained by measuring reception quality and the like of a plurality of candidate transmit beams and fed back by the reception side.

Here, whether the feedback is necessary for each transmit beam or not depends on presence of what is called reciprocity and the like. Reciprocity means that a channel response to a transmit signal is identical to a channel response to a receive signal. For example, in a Time Division Duplex (TDD) scheme, reciprocity may be established in a case where the same frequency, antenna, and beam pattern are used for transmission and/or reception. In this case, the same beam pattern as that for the receive beam can be used for the transmit beam, and feedback from the reception side is unnecessary for the transmit beam. Moreover, the feedback is similarly unnecessary in a case where the transmit beam is not variable, for example, in a case of a single antenna.

Moreover, in a case where beamforming is used for communication between one base station and one terminal apparatus, downlink transmit beams from the base station and uplink transmit beams from the terminal apparatus may be used as the transmit beams. For NR, selection of an uplink transmit beam during a random access procedure as described below has been studied.

First, in step 1 of the random access procedure, the terminal apparatus transmits one random access preamble selected from 64 candidates on a specific time and frequency resource notified in broadcast information, specifically, on a Physical Random Access Channel (PRACH) resource. The base station performs detection processing on 64 candidates for the random access preamble on the PRACH resource to hold Random Access Preamble Identifiers (hereinafter also referred to as RAPIDs) corresponding to successfully detected random access preambles.

Then, in step 2 of the random access procedure, the base station generates random access responses to all random access preambles detected on the same PRACH resource, combines the random access responses together, and further adds header information to the combined random access responses to configure a Medium Access Control (MAC) Protocol Data Unit (PDU) for random access responses.

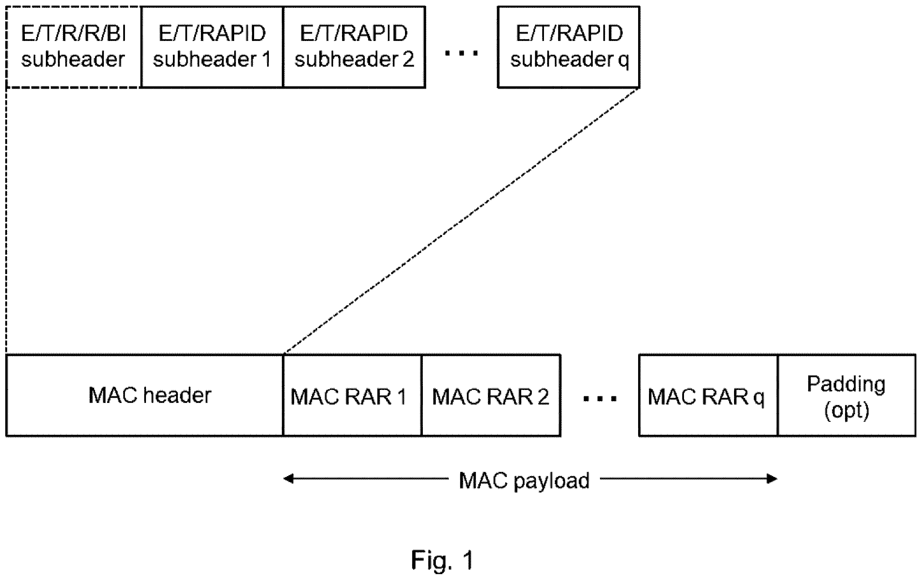

Fig. 1 is a diagram illustrating an example of a configuration of the Medium Access Control (MAC) Protocol Data Unit (PDU) for random access responses. In other words, as illustrated in Fig. 1, the MAC PDU for random access responses is divided into a MAC header, a MAC payload, and padding added as needed.

The MAC header is constituted of a plurality of subheaders, and is constituted of, for example, a BI subheader (E/T/R/R/BI MAC subheader) and RAPID subheaders (E/T/RAPID MAC subheaders) as illustrated in Fig. 1. Moreover, the MAC payload is constituted of a plurality of MAC random access responses (MAC RARs).

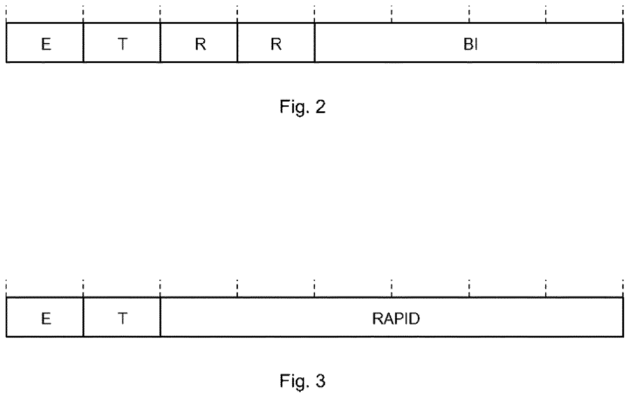

Fig. 2 is a diagram illustrating a format of the BI subheader. As illustrated in Fig. 2, the BI subheader includes, for example, a 1-bit "E" field, a 1-bit "T" field, a 1-bit "R" field, a 1-bit "R" field, and a 4-bit "BI" field.

Fig. 3 is a diagram illustrating a format of each RAPID subheader. As illustrated in Fig. 3, the RAPID subheader includes, for example, a 1-bit "E" field, a 1-bit "T" field, and a 6-bit "RAPID" field.

In the formats illustrated in Fig. 2 and Fig. 3, the "E" field with a value of 1 indicates that the subheader is succeeded by a MAC subheader, and the "E" field with a value of 0 indicates that the subheader is succeeded by a MAC payload or padding. Moreover, the "R" field represents an unused field and always has a value of 0. Furthermore, the "T" field with a value of 1 indicates that the MAC subheader is a RAPID subheader, and the "T" field with a value of 0 indicates the MAC subheader is a BI subheader.

Moreover, an ordinal position of each of RAPID subheaders included in the MAC header matches an ordinal position of a corresponding one of MAC random access responses (MAC RAR) included in the MAC payload.

Note that the BI subheader is added to the MAC PDU as needed. In a case where the BI subheader is added, the BI subheader needs to be the first subheader in the MAC header.

The MAC PDU for random access responses configured as described above is transmitted on a Physical Downlink Shared Channel (PDSCH) mapped in accordance with Downlink Control Information (DCI) included in a Physical Downlink Control Channel (PDCCH).

Here, whether the DCI represents mapping to the MAC PDU for random access responses or not is identified depending on whether a Cyclic Redundancy Check (CRC) for the DCI is scrambled with a Random Access-Radio Network Temporary Identifier (RA-RNTI). The RA-RNTI is a value varying with the PRACH resource on which the random access preamble is transmitted, that is, a value corresponding to the PRACH resource.

The terminal apparatus identifies the DCI by using the RA-RNTI corresponding to the PRACH resource on which the terminal apparatus has transmitted the random access preamble, and then attempts to decode the MAC PDU for random access responses included in the corresponding PDSCH. In a case of successful decoding, the terminal apparatus first checks whether the RAPID corresponding to the random access preamble transmitted by the terminal apparatus is included in the RAPID subheader. In a case where the RAPID is included in the RAPID subheader, the terminal apparatus extracts a MAC random access response corresponding to the ordinal position of the RAPID subheader.

### «2. Overview of Example Embodiments of the Present Invention»

### (1) Technical Issues

Studies have been conducted on feedback of information (beam related information) related to beams from the base station to the terminal apparatus by using the above-described random access response. However, no studies have been conducted on how to configure the above-described Medium Access Control Protocol Data Unit (MAC PDU) for random access responses in order to transmit the beam related information. Here, such a problem as described below occurs in a case where the beam related information such as uplink transmit beam information is fed back in the random access response with the reciprocity on the terminal apparatus side not taken into account. Specifically, terminal apparatuses needing no beam related information are also included in targets to which the beam related information is fed back. Thus, unnecessary information is transmitted, and this may lead to an issue of wasteful consumption of radio resources.

An example object of example embodiments of the present invention is to enable a MAC PDU including beam related information to be transmitted in downlink while reducing the use of radio resources.

### (2) Technical Features

According to the example embodiments of the present invention, for example, the base station includes an obtaining section configured to obtain a MAC PDU, and a transmission processing section configured to transmit the MAC PDU in downlink. The MAC PDU includes a plurality of identifiers and beam related information corresponding to each of one or more identifiers included in the plurality of identifiers and does not include beam related information corresponding to another identifier included in the plurality of identifiers.

Moreover, according to the example embodiments of the present invention, for example, the terminal apparatus includes a reception processing section configured to receive a MAC PDU in downlink: and an obtaining section configured to obtain information included in the MAC PDU. The MAC PDU includes a plurality of identifiers and beam related information corresponding to each of one or more identifiers included in the plurality of identifiers and does not include beam related information corresponding to another identifier included in the plurality of identifiers, and the obtaining section is configured to obtain beam related information corresponding to an identifier used for the terminal apparatus out of the plurality of identifiers.

The above-described configuration enables, for example, a MAC PDU including beam related information to be transmitted in downlink while reducing the use of radio resources.

Note that the above-described technical features are concrete examples of the example embodiments of the present invention, and, of course, the present example embodiments are not limited to the above-described technical features.

### «3. Configuration of System according to Example Embodiments of the Present Invention»

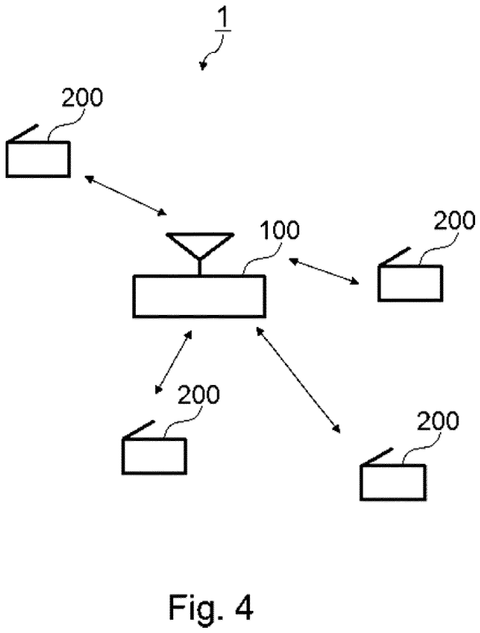

With reference to Fig. 4, an example of a configuration of a system 1 according to the present example embodiments will be described. Fig. 4 is an explanatory diagram illustrating an example of a schematic configuration of the system 1 according to the example embodiments of the present invention. With reference to Fig. 4, the system 1 includes a base station 100 and a plurality of terminal apparatuses 200 (four terminal apparatuses 200 in the example in Fig. 4).

For example, the system 1 is a system complying with the 3GPP standards. More specifically, the system 1 is a system complying with the fifth generation (5G) standards. Alternatively, the system 1 may be LTE/LTE-Advanced/LTE-Advanced Pro and/or System Architecture Evolution (SAE), or a Universal Mobile Telecommunications System (UMTS) complying with the third generation (3G) standards. Of course, the system 1 is not limited to these examples.

### (1) Base Station 100

The base station 100 is a node communicating wirelessly with terminal apparatuses, in other words, a node of a Radio Access Network (RAN). For example, the base station 100 communicates wirelessly with terminal apparatuses (e.g., a plurality of the terminal apparatuses 200). Specifically, the base station 100 transmits a signal to each of the terminal apparatuses 200 in downlink, and receives a signal from each of the terminal apparatuses 200 in uplink.

Moreover, the base station 100 may be an eNB, or a generation Node B (gNB) and/or a Transmission Reception Point (TRP) in 5G, or a Node B and/or a Radio Network Controller (RNC) in 3G. The base station 100 may include a plurality of units (or a plurality of nodes). The plurality of units (or the plurality of nodes) may include a first unit (or a first node) configured to perform higher protocol layer processing and a second unit (or a second node) configured to perform lower protocol layer processing. As an example, the first unit may be referred to as a Center/Central Unit (CU), and the second unit may be referred to as a Distributed Unit (DU) or an Access Unit (AU). As another example, the first unit may be referred to as a Digital Unit (DU), and the second unit may be referred to as a Radio Unit (RU) or a Remote Unit (RU). The Digital Unit (DU) may be a Base Band Unit (BBU), and the RU may be a Remote Radio Head (RRH) or a Remote Radio Unit (RRU). The terms for the first unit (or the first node) and the second unit (or the second node) are, of course, not limited to these examples. Alternatively, the base station 100 may be a single unit (or a single node). In this case, the base station 100 may be one of the plurality of units (e.g., one of the first unit and the second unit) or may be connected to another of the plurality of units (e.g., the other of the first unit and the second unit).

### (2) Terminal Apparatus 200

Each of the terminal apparatuses 200 communicates wirelessly with the base station 100. For example, the terminal apparatus 200 is User Equipment (UE) and is configured to receive a signal from the base station 100 in downlink and to transmit a signal to the base station 100 in uplink.

### «4. First Example Embodiment»

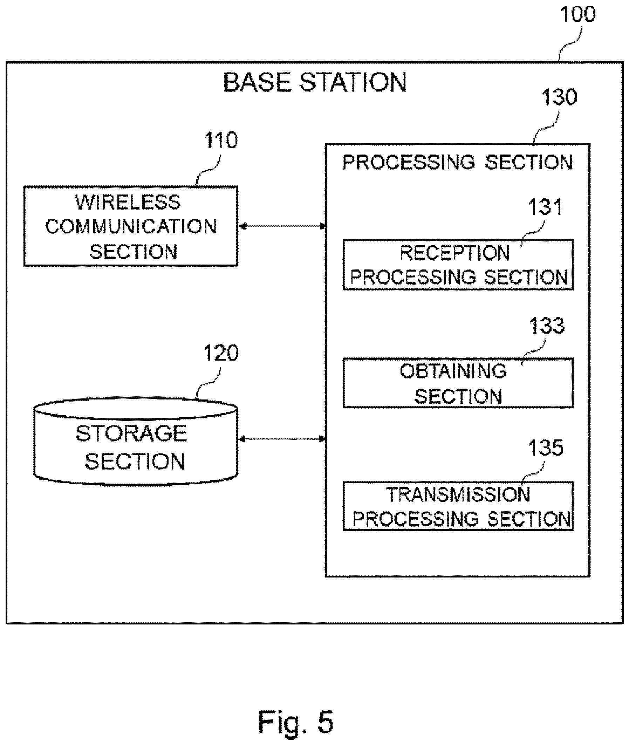

Now, a description will be given of a first example embodiment of the present invention with reference to Fig. 5 to Fig. 24.

### <4.1. Configuration of Base Station>

First, with reference to Fig. 5, a description will be given of an example of a configuration of the base station 100 according to the first example embodiment. Fig. 5 is a block diagram illustrating an example of a schematic configuration of the base station 100 according to the first example embodiment. With reference to Fig. 5, the base station 100 includes a wireless communication section 110, a storage section 120, and a processing section 130.

### (1) Wireless Communication Section 110

The wireless communication section 110 wirelessly transmits and/or receives a signal. For example, the wireless communication section 110 receives a signal from the terminal apparatus and transmits a signal to the terminal apparatus.

### (2) Storage Section 120

The storage section 120 temporarily or permanently stores programs and parameters for operations of the base station 100 as well as various data.

### (3) Processing Section 130

The processing section 130 provides various functions of the base station 100. The processing section 130 includes a reception processing section 131, an obtaining section 133, and a transmission processing section 135. Note that the processing section 130 may further include other constituent elements than these constituent elements. In other words, the processing section 130 may also perform operations other than the operations of these constituent elements. Concrete operations of the reception processing section 131, the obtaining section 133, and the transmission processing section 135 will be described later in detail.

For example, the processing section 130 (reception processing section 131) receives random access preambles from the plurality of terminal apparatuses 200 via the wireless communication section 110. Moreover, the processing section 130 (transmission processing section 135) transmits random access responses corresponding to the random access preambles, to the plurality of terminal apparatuses 200 via the wireless communication section 110.

### (4) Implementation Example

The wireless communication section 110 may be implemented with a directional antenna, a radio frequency (RF) circuit, and the like. The storage section 120 may be implemented with a memory (e.g., a nonvolatile memory and/or a volatile memory) and/or a hard disk, and the like. The processing section 130 may be implemented with a baseband (BB) processor and/or a different processor, and the like. The reception processing section 131, the obtaining section 133, and the transmission processing section 135 may be implemented with the same processor or may be implemented with separate processors. The memory (storage section 120) may be included in such a processor (chip).

The base station 100 may include a memory configured to store a program and one or more processors that can execute the program, and the one or more processors may perform operations of the processing section 130 (operations of the reception processing section 131, the obtaining section 133, and the transmission processing section 135). The program may be a program for causing the processor(s) to perform operations of the processing section 130 (operations of the reception processing section 131, the obtaining section 133, and the transmission processing section 135).

### <4.2. Configuration of Terminal Apparatus>

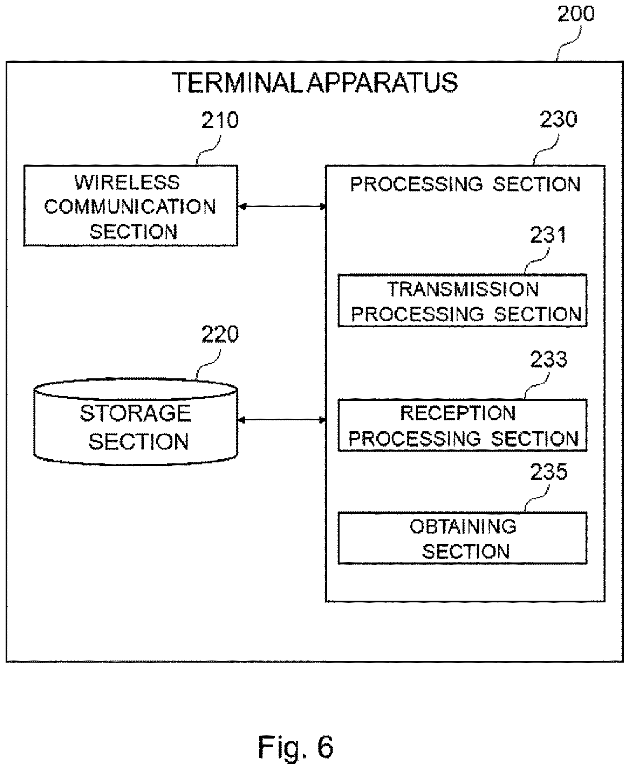

Now, with reference to Fig. 6, an example of a configuration of each terminal apparatus 200 according to the first example embodiment will be described. Fig. 6 is a block diagram illustrating an example of a schematic configuration of the terminal apparatus 200 according to the first example embodiment. With reference to Fig. 6, the terminal apparatus 200 includes a wireless communication section 210, a storage section 220, and a processing section 230.

### (1) Wireless Communication Section 210

The wireless communication section 210 wirelessly transmits and/or receives a signal. For example, the wireless communication section 210 receives a signal from the base station 100 and transmits a signal to the base station 100.

### (2) Storage Section 220

The storage section 220 temporarily or permanently stores programs and parameters for operations of the terminal apparatus 200 as well as various data.

### (3) Processing Section 230

The processing section 230 provides various functions of the terminal apparatus 200. The processing section 230 includes a transmission processing section 231, a reception processing section 233, and an obtaining section 235. Note that the processing section 230 may further include other constituent elements than these constituent elements. In other words, the processing section 230 may also perform operations other than the operations of these constituent elements. Concrete operations of the transmission processing section 231, the reception processing section 233, and the obtaining section 235 will be described later in detail.

For example, the processing section 230 (transmission processing section 231) transmits a random access preamble to the base station 100 via the wireless communication section 210. Moreover, the processing section 230 (reception processing section 233) receives a random access response from the base station 100 via the wireless communication section 210.

### (4) Implementation Example

The wireless communication section 210 may be implemented with an antenna, a radio frequency (RF) circuit, and the like. The storage section 220 may be implemented with a memory (e.g., a nonvolatile memory and/or a volatile memory) and/or a hard disk, and the like. The processing section 230 may be implemented with a baseband (BB) processor and/or a different processor, and the like. The transmission processing section 231, the reception processing section 233, and the obtaining section 235 may be implemented with the same processor or may be implemented with separate processors. The memory (storage section 220) may be included in such a processor (chip).

The terminal apparatus 200 may include a memory configured to store a program and one or more processors that can execute the program, and the one or more processors may perform operations of the processing section 230 (operations of the transmission processing section 231, the reception processing section 233, and the obtaining section 235). The program may be a program for causing the processor(s) to perform operations of the processing section 230 (operations of the transmission processing section 231, the reception processing section 233, and the obtaining section 235).

### <4.3. Technical Features>

Now, technical features of the first embodiment will be described. The base station 100 (obtaining section 133) obtains a MAC PDU. The base station 100 (transmission processing section 135) then transmits the MAC PDU in downlink. The MAC PDU includes a plurality of identifiers and beam related information corresponding to each of one or more identifiers included in the plurality of identifiers and does not include beam related information corresponding to another identifier included in the plurality of identifiers.

Note that, so long as the base station 100 obtains and transmits at least a MAC PDU as that described above, the base station 100 may obtain and transmit a different type of MAC PDU such as a MAC PDU including beam related information corresponding to all of the plurality of identifiers or a MAC PDU including no beam related information corresponding to any of the plurality of identifiers.

In particular, each of the plurality of identifiers is information used for a corresponding one of the plurality of terminal apparatuses 200, more specifically, identification information for the corresponding one of the plurality of terminal apparatuses 200. Furthermore, the MAC PDU includes data corresponding to each of the plurality of identifiers.

The terminal apparatus 200 (reception processing section 233) receives the MAC PDU in downlink. The terminal apparatus 200 (obtaining section 235) obtains information included in the MAC PDU. In other words, the terminal apparatus 200 (obtaining section 235) obtains beam related information corresponding to an identifier included in the plurality of identifiers and used for the terminal apparatus 200.

Specifically, the terminal apparatus 200 (obtaining section 235) obtains the beam related information corresponding to the identifier used for the terminal apparatus 200 in a case where the identifier used for the terminal apparatus 200 is included in the one or more identifiers.

As described above, the MAC PDU includes the beam related information corresponding to each of one or more identifiers included in the plurality of identifiers and does not include the beam related information corresponding to another identifier included in the plurality of identifiers. This enables the beam related information to be transmitted in downlink while reducing the use of radio resources.

### (1) Header

The MAC PDU includes a MAC header. The MAC header includes a first region in which the plurality of identifiers is arranged and a second region in which the beam related information corresponding to each of the one or more identifiers is arranged. In particular, in the first region, the one or more identifiers are arranged ahead of the above-described another identifier.

More specifically, when the plurality of identifiers is assumed to be N (N ≥ 2) identifiers, the MAC PDU includes the beam related information corresponding to each of M (1 ≤ M < N) identifiers included in the plurality of identifiers. In other words, in the second region, the beam related information corresponding to each of the M identifiers is arranged. Moreover, an m-th (1 ≤ m ≤ M) piece of the beam related information in an order within the second region corresponds to an m-th identifier in an order within the first region.

### - Subheader

Each of the plurality of identifiers is included in a first type of subheader in the MAC header. Moreover, the beam related information corresponding to each of the one or more identifiers is included in a second type of subheader in the MAC header.

The first type of subheader includes first indication information. Moreover, the second type of subheader includes second indication information different from the first indication information.

Moreover, the MAC header includes a third type of subheader.

The third type of subheader includes third indication information different from the first indication information and the second indication information, for example, as in Example 1 described below.

Moreover, the MAC header may be restricted in that the second region does not include the first subheader in the MAC header, for example, as in Example 2 described below. In a case where such restriction is imposed, the third type of subheader includes, for example, the second indication information, and is the first MAC subheader in the MAC header. Note that, in a case where such restriction is imposed and where the third type of subheader is unnecessary, the first subheader in the MAC header may be included in the first region.

Moreover, the third type of subheader includes, for example, a backoff indicator. Specifically, the backoff indicator is information indicating to the terminal apparatus a backoff time for a retransmission process. For example, in a case of failing to access the base station 100, the terminal apparatus 200 determines a time to wait until the retransmission process, in other words, the backoff time, based on a value of the backoff indicator.

### (2) Payload

The MAC PDU includes a MAC payload. The MAC payload includes a fourth region in which the data corresponding to each of the plurality of identifiers is arranged. Furthermore, an n-th (1 ≤ n ≤ N) data in an order within the fourth region corresponds to an n-th identifier in an order within the first region.

### (3) Random Access

The MAC PDU is a response corresponding to access from the plurality of terminal apparatuses 200. In particular, the access from the plurality of terminal apparatuses 200 is, for example, random access from the plurality of terminal apparatuses 200. In other words, the MAC PDU is random access responses corresponding to random access preambles transmitted by the plurality of terminal apparatuses 200. Each of the plurality of identifiers is a random access preamble identifier (RAPID).

### (4) Beam Related Information

The beam related information corresponding to each of the one or more identifiers is information related to an uplink transmit beam corresponding to each of the one or more identifiers. In particular, the beam related information corresponding to each of the one or more identifiers is information related to an uplink transmit beam used by the terminal apparatus 200 corresponding to each of the one or more identifiers.

For example, a UTBI field in a MAC subheader (also referred to as a UTBI subheader) for notifying information related to an uplink transmit beam (UL Tx Beam Indicator (UTBI)) is separated at intervals of a predetermined number of bits.

Moreover, the information related to the uplink transmit beam may be in any form so long as the terminal apparatus 200 uses the information to select an uplink transmit beam.

Examples of the information related to the uplink transmit beam can include an index applied to the uplink transmit beam and an offset value used for calculation of the index. Using such information as the information related to the uplink transmit beam allows the terminal apparatus 200 to select the uplink transmit beam.

Furthermore, in a case where one terminal apparatus 200 uses different transmit beams from each other to transmit the same random access preamble to the base station 100 in different time and frequency resources from each other, the information related to the uplink transmit beam can be, for example, information related to time and frequency resources in which the random access preamble has been detected at the highest receive power on the base station 100 side. This allows the terminal apparatus 200 to select a transmit beam as is received at the highest receive power on the base station 100 side. Note that, in yet another example, in a case where, for example, the terminal apparatus 200 transmits a group of random access preambles while varying the transmit beam for each cyclic shift, scrambling, or spreading code to the base station 100, information identifying the cyclic shift, the scrambling, the spreading code, or the like can be used as the information related to the uplink transmit beam.

Note that, in a case where no UTBI corresponding to the random access preamble identifier (RAPID) for the terminal apparatus 200 is present in the MAC PDU even though feedback of the UTBI is needed on the terminal apparatus 200 side, the terminal apparatus 200 may select an uplink transmit beam by using the following method.

By way of example, in a case where the terminal apparatus 200 uses a plurality of uplink transmit beams to transmit a plurality of random access preambles with different indexes (hereinafter referred to as random access preamble indexes), an uplink transmit beam corresponding to the random access preamble with the smallest random access preamble index is selected.

Moreover, in a case where a UTBI corresponding to the random access preamble identifier (RAPID) is present in the MAC PDU even though feedback of the UTBI is not needed on the terminal apparatus 200 side, the terminal apparatus 200 may neglect the UTBI.

### (5) Data Size of Beam Related Information

The base station 100 (transmission processing section 135) transmits, in downlink, information related to a data size of the beam related information corresponding to each of the one or more identifiers. Specifically, the base station 100 (transmission processing section 135) transmits system information including the information related to the data size in downlink. Moreover, the information related to the data size may be information indicating the data size itself or different information used to determine the data size (e.g., information indicating the number of candidate beams).

On the other hand, the terminal apparatus 200 (reception processing section 233) receives the information related to the data size in downlink. Specifically, the terminal apparatus 200 (reception processing section 233) receives the system information including the information related to the data size in downlink.

Thus, the data size of the beam related information can have an optional number of bits where the number is one or more.

### <4.4. Examples>

Now, examples of the above-described MAC PDU will be described.

### (1) MAC PDU according to Example 1

A MAC header according to Example 1 is constituted of a total of three types of MAC subheaders: a BI subheader, UTBI subheaders, and RAPID subheaders. Note that the MAC header need not include any BI header.

As illustrated in Fig. 3 described above, the RAPID subheader includes, for example, a 1-bit "E" field, a 1-bit "T" field, and a 6-bit "RAPID" field.

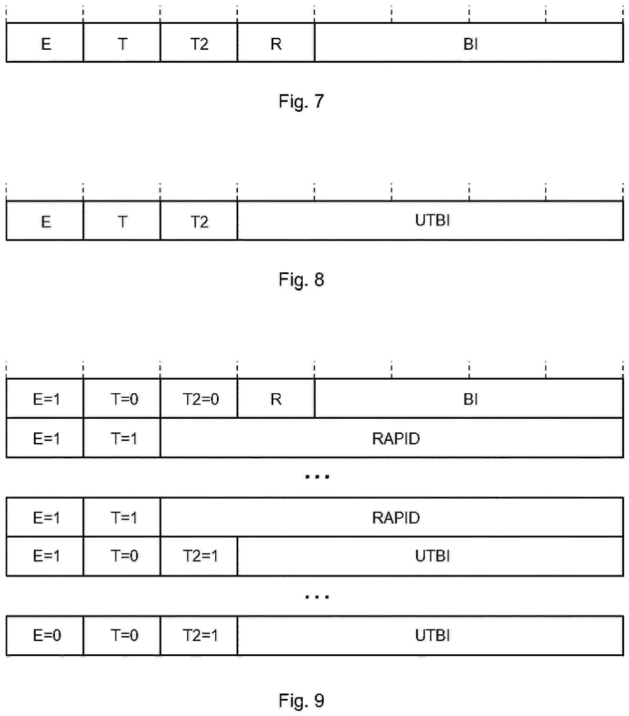

Moreover, Fig. 7 is a diagram illustrating a format of the BI subheader according to Example 1. As illustrated in Fig. 7, the BI subheader includes, for example, a 1-bit "E" field, a 1-bit "T" field, a 1-bit "T2" field, a 1-bit "R" field, and a 4-bit "BI" field.

Fig. 8 is a diagram illustrating a format of the UTBI subheader according to Example 1. As illustrated in Fig. 8, the UTBI subheader includes, for example, a 1-bit "E" field, a 1-bit "T" field, a 1-bit "T2" field, and a 5-bit "UTBI" field.

In Example 1, the "E" field with a value of 1 indicates that the subheader is succeeded by a MAC subheader, and the "E" field with a value of 0 indicates that the subheader is succeeded by a MAC payload or padding. Moreover, the "R" field represents an unused field and always has a value of 0.

Furthermore, in Example 1, the "T" and "T2" fields are used to represent the first indication information, the second indication information, and the third indication information to uniquely identify a total of three types of MAC subheaders: the BI subheader, the UTBI subheader, and the RAPID subheader.

First, in a case where both the "T" and "T2" fields have a value of 0, the "T" and "T2" fields represent the third indication information. In other words, the third indication information indicates that the MAC subheader is a BI subheader. Moreover, in a case where the "T" and "T2" fields respectively have values of 0 and 1, the "T" and "T2" fields represent the second indication information. In other words, the second indication information indicates that the MAC subheader is a UTBI subheader. In a case where the "T" field has a value of 1, the value of the "T" field represents the first indication information. In other words, the first indication information indicates that the MAC subheader is a RAPID subheader.

Such an identification method allows the MAC subheaders to be arranged in an arbitrary order so long as the arrangement satisfies a correspondence relationship between the UTBI subheaders and the RAPID subheaders. For example, the MAC subheaders can be configured as follows.

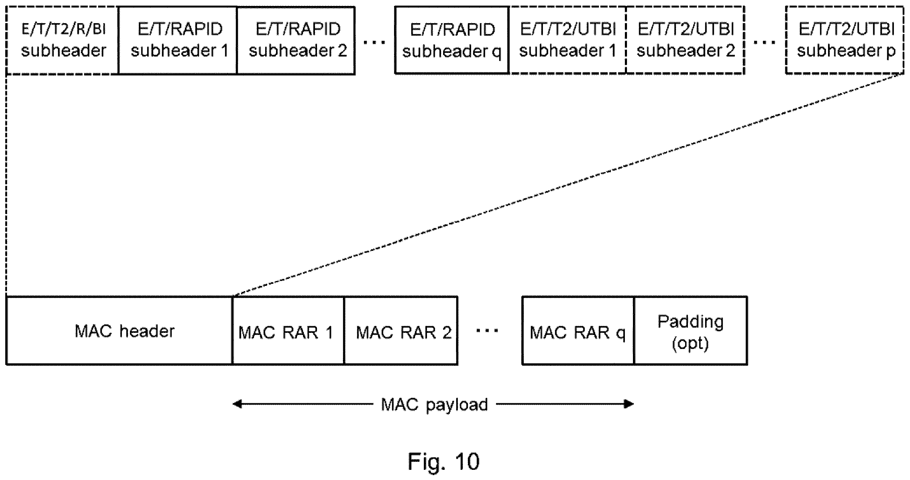

Fig. 9 is a diagram illustrating an example of a configuration of the MAC header in which the MAC subheaders are identified using the "T" and "T2" fields. Moreover, Fig. 10 is a diagram illustrating an entire configuration of a MAC PDU corresponding to the example of the configuration of the MAC header illustrated in Fig. 9. The example illustrated in Fig. 9 and Fig. 10 illustrates an example of a configuration including a region where RAPID subheaders (E/T/RAPID subheaders) are arranged and a succeeding region where UTBI subheaders (E/T/T2/UTBI subheaders) are arranged.

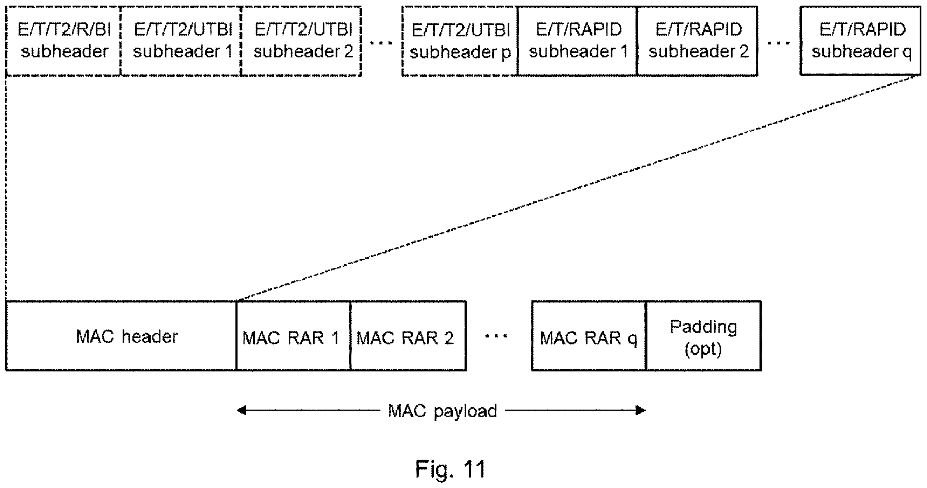

Moreover, Fig. 11 is a diagram illustrating another example of the configuration of the MAC PDU according to Example 1. Specifically, Fig. 11 illustrates an example of a configuration populated with a region where UTBI subheaders (E/T/T2/LTTBI subheaders) are arranged and a succeeding region where RAPID subheaders (E/T/RAPID subheaders) are arranged.

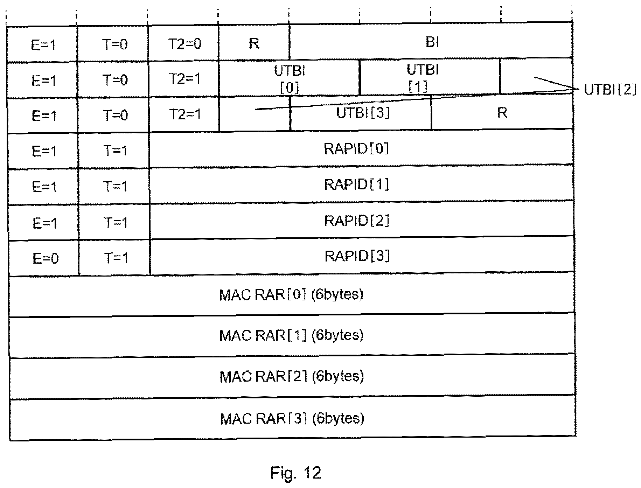

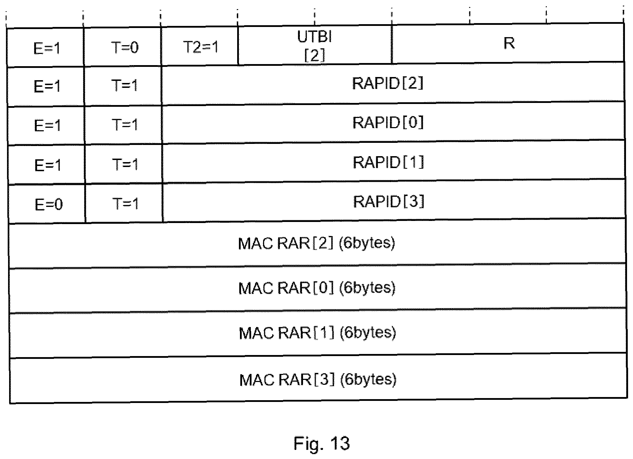

Moreover, each of Fig. 12 and Fig. 13 is a diagram illustrating an example of a configuration of fields of the MAC PDU according to Example 1.

In the MAC PDU illustrated in Fig. 12, a BI subheader is present, the number of terminal apparatuses to which random access responses are transmitted is four, the number of terminal apparatuses to be notified of the UTBI is four, and the number of bits of the UTBI is two.

In the MAC PDU illustrated in Fig. 13, no BI subheader is present, the number of terminal apparatuses to which random access responses are transmitted is four, the number of terminal apparatuses to be notified of the UTBI is one, and the number of bits of the UTBI is two.

Here, in a case where the UTBI is fed back to only some of the terminal apparatuses, e.g., one of the four terminal apparatuses, as illustrated in Fig. 13, a RAPID subheader including the RAPID of the terminal apparatus to which the UTBI is fed back is arranged at a leading position and transmitted. Specifically, in the region where RAPIDs are arranged (first region), RAPID[2] (the one or more identifiers) involving feedback of the UTBI is arranged ahead of RAPID [0], RAPID[1], and RAPID [3] (the above-described another identifier, or other identifiers) involving no feedback of the UTBI.

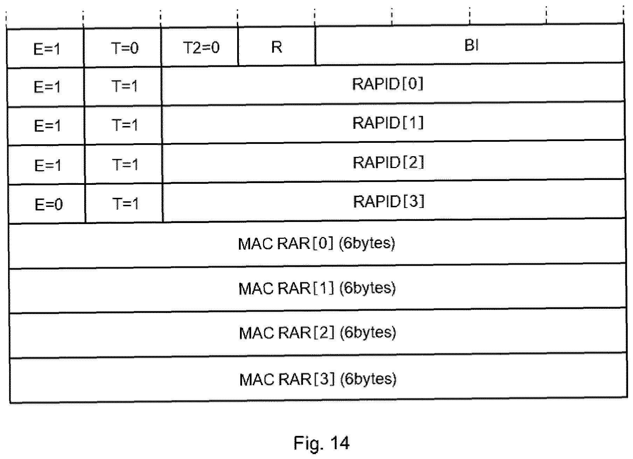

Note that, even in a case where the "T2" field is added to a MAC PDU subheader for a random access response as in Example 1 described above, a case where the UTBI is not notified can be dealt with. Fig. 14 is a diagram illustrating an example of the configuration of the fields of the MAC PDU according to Reference Example. In the MAC PDU illustrated in Fig. 14, a BI subheader is present, the number of terminal apparatuses to which random access responses are transmitted is four, and the number of terminal apparatuses to be notified of the UTBI is zero.

Moreover, Example 1 described above is not limited to a case where the regions where the MAC subheaders are arranged are contiguous with one another as illustrated in Fig. 9 to Fig. 13 described above. Specifically, the MAC subheaders can be identified on the terminal apparatus 200 side in a case where the RAPID subheaders and the UTBI subheaders are arranged in such an order as to keep the correspondence relationship of these subheaders. Thus, for example, regions in which the MAC subheaders are arranged may be discontiguous with one another.

### (2) MAC PDU according to Example 2

Now, Example 2 will be described.

A MAC header according to Example 2 is constituted of a total of three types of MAC subheaders: a BI subheader, UTBI subheaders, and RAPID subheaders. Note that the MAC header need not include any BI header.

As illustrated in Fig. 2 described above, the BI subheader includes, for example, a 1-bit "E" field, a 1-bit "T" field, a 1-bit "R" field, a 1-bit "R" field, and a 4-bit "BI" field.

As illustrated in Fig. 3 described above, the RAPID subheader includes, for example, a 1-bit "E" field, a 1-bit "T" field, and a 6-bit "RAPID" field.

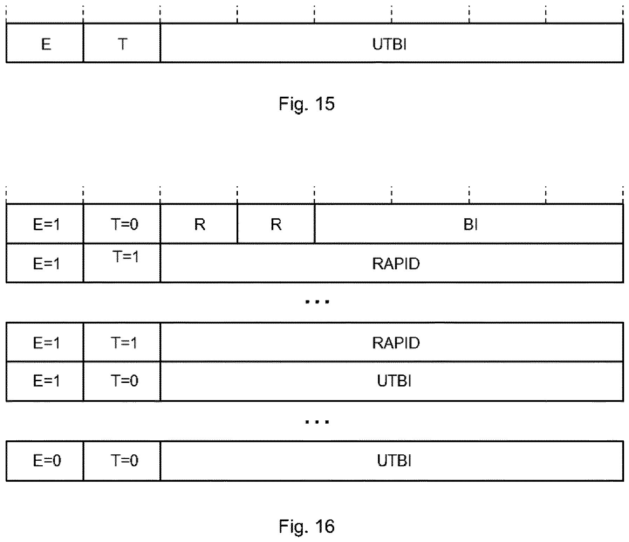

Fig. 15 is a diagram illustrating a format of the UTBI subheader according to Example 2. As illustrated in Fig. 15, the UTBI subheader includes, for example, a 1-bit "E" field, a 1-bit "T" field, and a 6-bit "UTBI" field.

In Example 2, the "E" field with a value of 1 indicates that the subheader is succeeded by a MAC subheader, and the "E" field with a value of 0 indicates that the subheader is succeeded by a MAC payload or padding. Moreover, the "R" field represents an unused field and always has a value of 0.

Furthermore, in Example 2, the "T" field in the MAC subheader is used to represent the first indication information and the second indication information.

In other words, in Example 2, in a case where the "T" field has a value of 0, the value of the "T" field represents the second indication information and indicates that the MAC subheader is a BI subheader or a UTBI subheader. In a case where the "T" field has a value of 1, the value of the "T" field represents the first indication information and indicates that the MAC subheader is a RAPID subheader.

Furthermore, in a case where the MAC subheader includes the second indication information, in other words, the "T" field has a value of 0, the BI subheader and the UTBI subheaders are identified according to the ordinal position of the MAC subheader within the MAC header. Specifically, in a case where the "T" field has a value of 0 and the MAC subheader is located at the first position within the MAC header, the MAC subheader is identified as a BI subheader. In a case where the "T" field has a value of 0 and the MAC subheader is located at a position other than the first position within the MAC header, the MAC subheader is identified as a UTBI subheader.

Compared to Example 1, Example 2 is restricted in the arrangement of the BI subheader and the UTBI subheaders, but involves a smaller number of bits used for the indication information. This enables an increase in the number of bits of the UTBI per UTBI subheader, for example, enables the "UTBI" field in the UTBI subheader to include 6 bits.

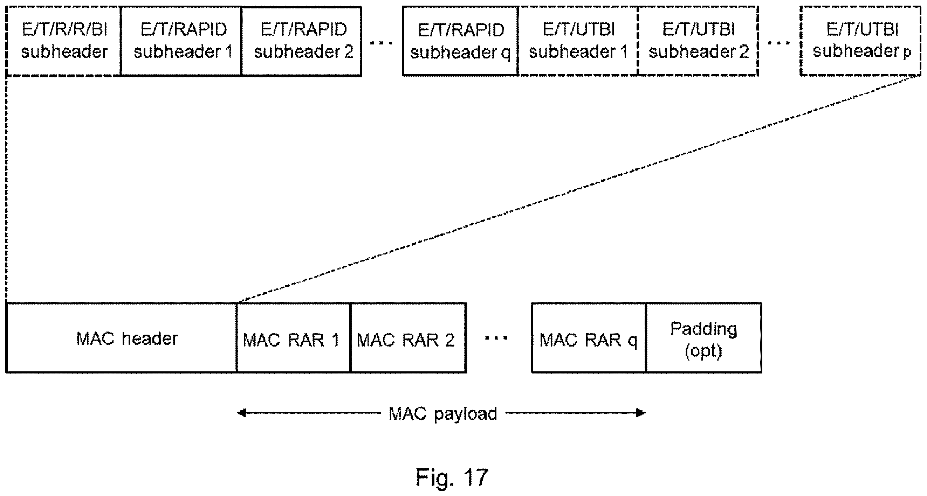

Fig. 16 is a diagram illustrating an example of a configuration of the MAC header in which the MAC subheaders are identified using the "T" field and the ordinal position of each MAC subheader. Moreover, Fig. 17 is a diagram illustrating an entire configuration of a MAC PDU corresponding to the example of the configuration of the MAC header illustrated in Fig. 16. Fig. 16 and Fig. 17 illustrate an example of a configuration including a BI subheader (E/T/R/R/BI subheader) as the first MAC subheader, succeeded by a region where RAPID subheaders (E/T/RAPID subheaders) are arranged, succeeded by a region where UTBI subheaders (E/T/LTTBI subheaders) are arranged.

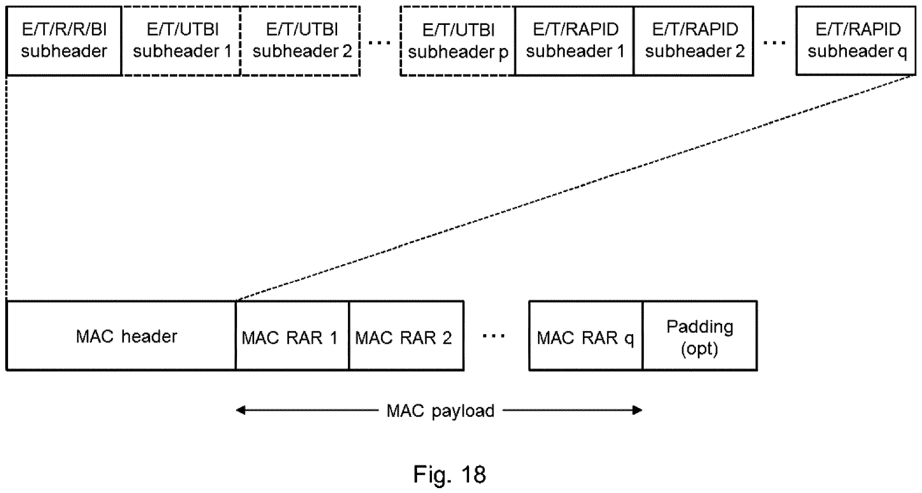

Fig. 18 is a diagram illustrating another example of the configuration of the MAC header in which the MAC subheaders are identified using the "T" field and the ordinal position of each MAC subheader. Specifically, Fig. 18 illustrates an example of a configuration including a BI subheader (E/T/R/R/BI subheader) as the first MAC subheader, succeeded by a region where UTBI subheaders (E/T/LTTBI subheaders) are arranged, succeeded by a region where RAPID subheaders (E/T/RAPID subheaders) are arranged.

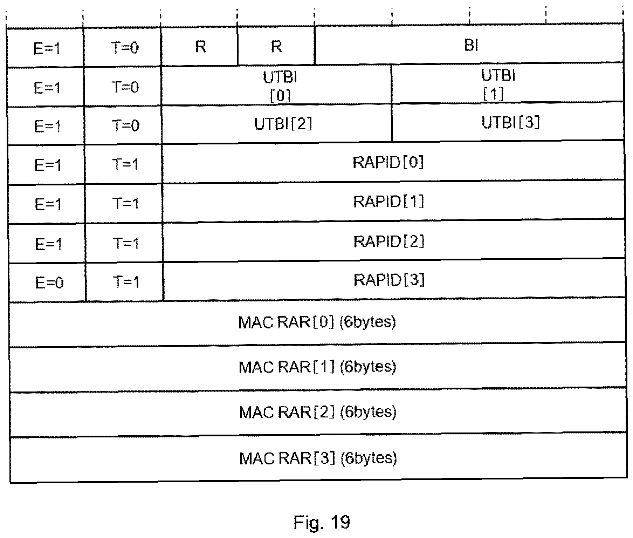

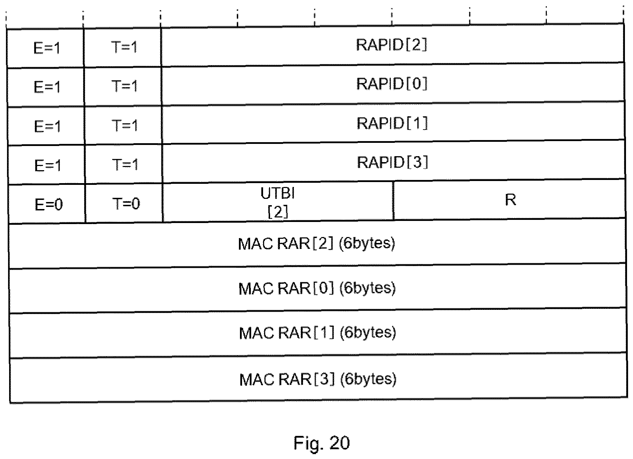

Moreover, each of Fig. 19 and Fig. 20 is a diagram illustrating an example of a configuration of the fields of the MAC PDU according to Example 2.

In the MAC PDU illustrated in Fig. 19, a BI subheader is present, the number of terminal apparatuses to which random access responses are transmitted is four, the number of terminal apparatuses to be notified of the UTBI is four, and the number of bits of the UTBI is three.

In the MAC PDU illustrated in Fig. 20, no BI subheader is present, the number of terminal apparatuses to which random access responses are transmitted is four, the number of terminal apparatuses to be notified of the UTBI is one, and the number of bits of the UTBI is three.

Here, in a case where the UTBI is fed back to only some of the terminal apparatuses, e.g., one of the four terminal apparatuses, as illustrated in Fig. 20, a RAPID subheader including the RAPID of the terminal apparatus to which the UTBI is fed back is arranged at a leading position and transmitted as is the case with Example 1. In other words, in the region where the RAPID is arranged (first region), RAPID[2] (the one or more identifiers) involving feedback of the UTBI is arranged ahead of RAPID[0], RAPID[1], and RAPID[3] (the above-described another identifier) involving no feedback of the UTBI.

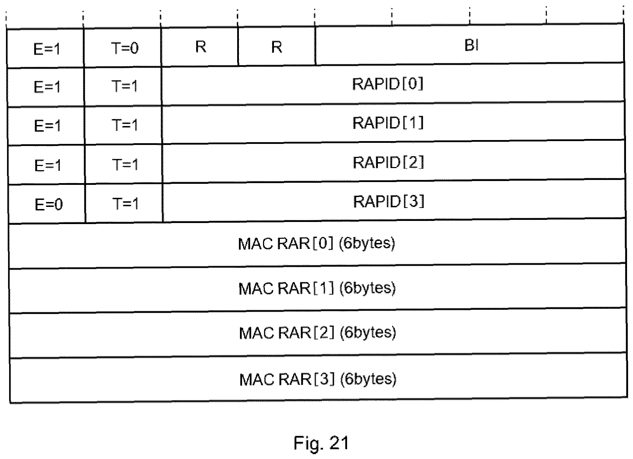

Note that, even in a case where the arrangement of the BI subheader and the UTBI subheaders is restricted as in Example 2 described above, the case where the UTBI is not notified can be dealt with. Fig. 21 is a diagram illustrating an example of the configuration of the fields of the MAC PDU according to Reference Example. In the MAC PDU illustrated in Fig. 21, a BI subheader is present, the number of terminal apparatuses to which random access responses are transmitted is four, and the number of terminal apparatuses to be notified of the UTBI is zero.

Moreover, Example 2 described above is not limited to a case where the regions where the MAC subheaders are arranged are contiguous with one another as illustrated in Fig. 16 to Fig. 20 described above, in a case where a condition that the UTBI subheader is other than the first MAC subheader within the MAC header is satisfied. Specifically, the MAC subheaders can be identified on the terminal apparatus 200 side in a case where the RAPID subheaders and the UTBI subheaders are arranged in such an order as to keep the correspondence relationship of these subheaders. Thus, for example, regions in which the MAC subheaders are arranged may be discontiguous with one another.

### (3) Flow of Processing

### - Base Station

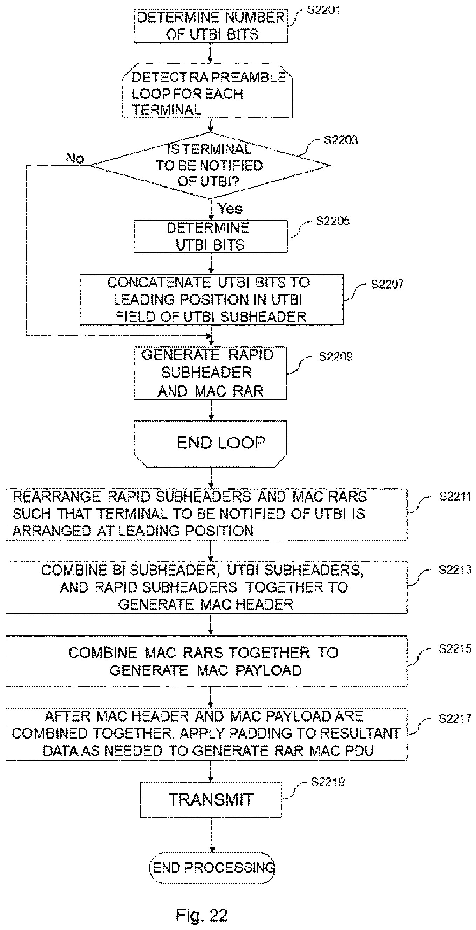

Now, with reference to Fig. 22, a schematic flow of processing in the base station 100 will be described. Fig. 22 is a flowchart for describing an example of a schematic flow of processing in the base station 100. The flowchart in Fig. 22 illustrates contents of processing common to both MAC PDU transmission processing according to Example 1 and MAC PDU transmission processing according to Example 2.

The base station 100 determines the number of bits of the UTBI and uses the transmission processing section 135 to transmit information related to the determined number of bits of the UTBI in downlink (step S2201). The base station 100 subsequently performs, as a loop process, step S2203 to step S2209 for each terminal apparatus for which the random access preamble (RAPreamble) has been detected.

First, the base station 100 determines whether the terminal apparatus for which the random access preamble has been detected is to be notified of the UTBI or not (step S2203). For example, the base station 100 can divide, into two regions, a time and frequency resource for random access preambles transmitted from the terminal apparatuses 200, and determine the random access preambles detected in one of the regions to correspond to the terminal apparatuses to be notified of the UBTI, while determining the random access preambles detected in the other region not to correspond to the terminal apparatuses to be notified of the UBTI. Moreover, the base station 100 may, for example, determine the random access preamble detected in the one of the areas to have been transmitted from the terminal apparatus 200 for which reciprocity is established. In other words, the base station 100 may determine that the random access preamble has been transmitted from the terminal apparatus 200 at which correspondence between the transmit beam and the receive beam is held (the transmit beam and the receive beam hold correspondence at the terminal apparatus 200).

Note that the present example embodiment is not limited to the division of the time and frequency resource into two regions but that, for example, whether the terminal apparatus is to be notified of the UTBI or not may be determined based on two groups into which a sequence used for the random access preambles is divided depending on whether the UTBI field is needed or not.

In a case where the terminal apparatus is to be notified of the UTBI (step S2203: Yes), the base station 100 determines UTBI bit information for the detected terminal apparatus (step S2205), arranges the determined UBTI at a leading position in the UTBI field of the UTBI subheader (step S2207), and then proceeds to step S2209. On the other hand, in a case where the terminal apparatus is not to be notified of the UTBI (S2203: No), the base station 100 proceeds to step S2209 without performing step S2205 and step S2207.

In step S2209, the base station 100 generates a RAPID subheader and a MAC random access response (RAR).

The base station 100 performs step S2203 to step S2209 for all the terminal apparatuses for which the random access preamble has been detected, and then proceeds to step S2211.

In step S2211, the base station 100 rearranges the RAPID subheaders and the MAC random access responses such that the information related to the terminal apparatuses to be notified of the UTBI is placed sequentially from the leading position. The base station 100 subsequently combines the BI subheader, the UTBI subheaders, and the RAPID subheaders together to generate a MAC header (step S2213). The base station 100 subsequently combines the MAC random access responses (RARs) together to generate a MAC payload (step S2215). The base station 100 subsequently combines the MAC header and the MAC payload together, and applies padding to the resultant data as needed to generate a MAC PDU for random access responses (step S2217). The base station 100 (obtaining section 133) subsequently obtains the generated MAC PDU, and the base station 100 (transmission processing section 135) transmits the obtained MAC PDU in downlink (step S1229) and terminates the processing illustrated in FIG. 22.

### - Terminal Apparatus

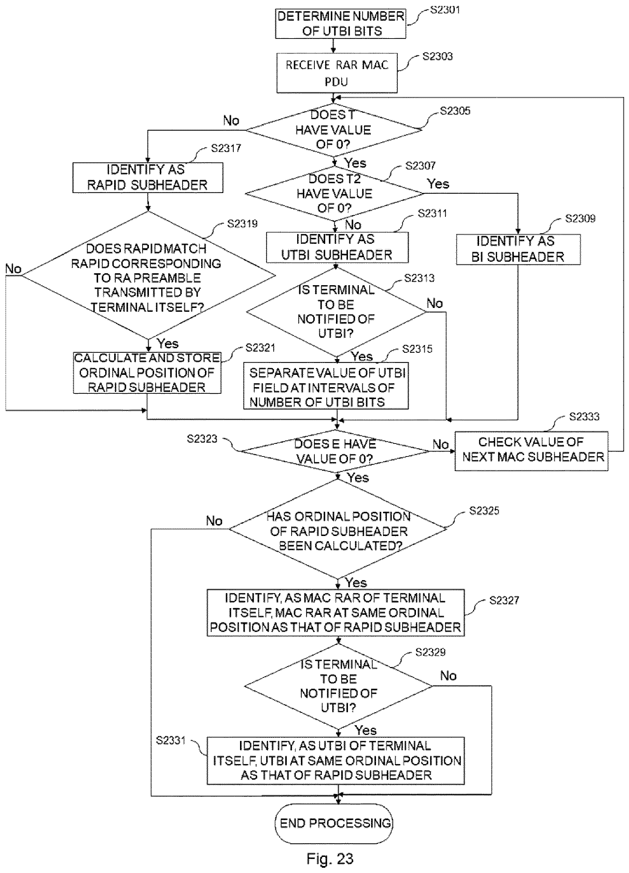

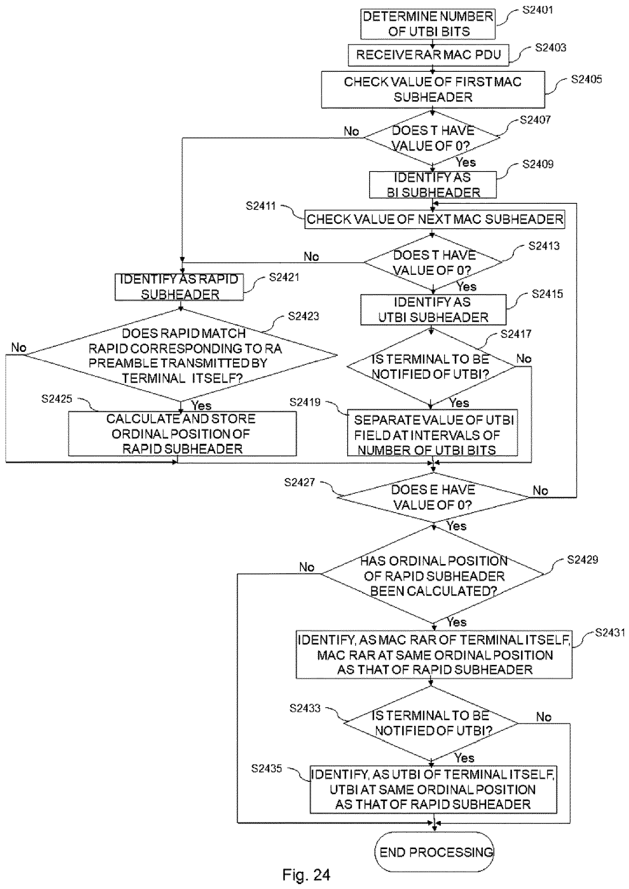

Now, with reference to Fig. 23 and Fig. 24, a schematic flow of processing in the terminal apparatus 200 will be described.

### (MAC PDU Reception Processing according to Example 1)

Fig. 23 is a flowchart for describing an example of a schematic flow of MAC PDU reception processing according to Example 1.

The terminal apparatus 200 (reception processing section 233) receives the information related to the number of bits of the UTBI in downlink to determine the number of bits of the UTBI (step S2301). The terminal apparatus 200 (reception processing section 233) subsequently receives a MAC PDU for random access responses (step S2303). The terminal apparatus 200 subsequently determines, for the MAC subheaders of the received MAC PDU, whether the "T" field has a value of 0 (step S2305).

In a case where the "T" field has a value of 0 (S2305: Yes), the terminal apparatus 200 determines whether the "T2" field is 0 or not (step S2307). Here, in a case where the "T2" field is 0 (S2307: Yes), the terminal apparatus 200 identifies the MAC subheader as a BI subheader (step S2309) and proceeds to S2323. On the other hand, in a case where the "T2" field is not 0 but 1 (S2307: No), the terminal apparatus 200 identifies the MAC subheader as a UTBI subheader (step S2311) and determines whether the terminal itself (terminal apparatus 200) is to be notified of the UTBI or not (step S2313). In a case where the terminal apparatus 200 is to be notified of the UTBI (S2313: Yes), the terminal apparatus 200 separates the value of the UTBI field at intervals of bits (step S2315) and proceeds to step S2323. In a case where the terminal apparatus 200 is not to be notified of the UTBI (S2313: No), the terminal apparatus 200 proceeds to step S2323 without proceeding to step S2315.

In a case where the value of the "T" field is not 0 but 1 (S2305: No), the terminal apparatus 200 identifies the MAC subheader as a RAPID subheader (step S2317) and determines whether the identified RAPID matches a RAPID corresponding to the random access preamble (RA Preamble) transmitted by the terminal itself (terminal apparatus 200) (step S2319). In a case where the identified RAPID matches the RAPID corresponding to the random access preamble transmitted by the terminal apparatus 200 (step S2319: Yes), the terminal apparatus 200 calculates and stores the ordinal position of the RAPID subheader (step S2321) and proceeds to step S2323. In a case where the identified RAPID does not match the RAPID corresponding to the random access preamble transmitted by the terminal apparatus 200 (step S2319: No), the terminal apparatus 200 proceeds to step S2323 without proceeding to step S2321.

In step S2323, the terminal apparatus 200 determines whether the "E" field of the MAC subheader has a value of 0.

In a case where the "E" field of the MAC subheader has a value of 1 instead of 0 (S2323: No), the terminal apparatus 200 checks the value of the subsequent MAC subheader (step S2333) and returns to step S2305.

In a case where the "E" field has a value of 0 (S2323: Yes), the terminal apparatus 200 determines whether the ordinal position of the RAPID subheader has been calculated or not (step S2325). In a case where the ordinal position of the RAPID subheader has been calculated (S2325: Yes), the terminal apparatus 200 identifies, as the MAC random access response (RAR) of the terminal itself (terminal apparatus 200), a MAC random access response (RAR) at the same ordinal position as that of the RAPID subheader (step S2327), and proceeds to step S2329. On the other hand, in a case where the ordinal position of the RAPID subheader has not been calculated (S2325: No), the terminal apparatus 200 terminates the processing illustrated in Fig. 23. The terminal apparatus 200 subsequently determines whether the terminal itself (terminal apparatus 200) is to be notified of the UTBI or not (step S2329). In a case where the terminal apparatus 200 is to be notified of the UTBI (S2329: Yes), the terminal apparatus 200 identifies, as the UTBI of the terminal itself (terminal apparatus 200), a UTBI at the same ordinal position as that of the RAPID subheader (step S2331) and terminates the processing illustrated in Fig. 23. On the other hand, in a case where the terminal apparatus 200 is not to be notified of the UTBI (S2329: No), the terminal apparatus 200 terminates the processing illustrated in Fig. 23 without proceeding to step S2331.

### (MAC PDU Reception Processing according to Example 2)

Fig. 24 is a flowchart for describing an example of a schematic flow of MAC PDU reception processing according to Example 2.

The terminal apparatus 200 (reception processing section 233) receives the information about the number of bits of the UTBI in downlink to determine the number of bits of the UTBI (step S2401). The terminal apparatus 200 (reception processing section 233) subsequently receives a MAC PDU for random access responses (step S2403). The terminal apparatus 200 subsequently checks the value of the first MAC subheader within the MAC header (step S2405) to determine whether the "T" field has a value of 0 or not (step S2407). In a case where the "T" field has a value of 0 (S2407: Yes), the terminal apparatus 200 proceeds to step S2409. In a case where the "T" field has a value of 1 instead of 0 (S2407: No), the terminal apparatus 200 proceeds to step S2421.

The terminal apparatus 200 identifies the MAC subheader as a BI subheader in step S2409, and checks the value of the next MAC subheader (step S2411) to determine whether the "T" field has a value of 0 or not (step S2413). In a case where the "T" field has a value of 0 (S2413: Yes), the terminal apparatus 200 proceeds to step S2415. In a case where the "T" field has a value of 1 instead of 0 (S2413: No), the terminal apparatus 200 proceeds to step S2421.

The terminal apparatus 200 identifies the MAC subheader as a UTBI subheader in step S2415, and determines whether the terminal itself (terminal apparatus 200) is to be notified of the UTBI or not (step S2417). In a case where the terminal apparatus 200 is to be notified of the UTBI (step S2417: Yes), the terminal apparatus 200 separates the value of the UTBI field at intervals of bits (step S2419) and proceeds to step S2427. In a case where the terminal apparatus 200 is not to be notified of the UTBI (step S2417: No), the terminal apparatus 200 proceeds to S2427 without proceeding to step S2419.

The terminal apparatus 200 identifies the MAC subheader as a RAPID subheader in step S2421, and determines whether the identified RAPID matches a RAPID corresponding to the random access preamble (RA Preamble) transmitted by the terminal itself (terminal apparatus 200) (step S2423). In a case where the identified RAPID matches the RAPID corresponding to the random access preamble transmitted by the terminal apparatus 200 (S2423: Yes), the terminal apparatus 200 calculates and stores the ordinal position of the RAPID subheader (step S2425) and proceeds to step S2427. In a case where the identified RAPID does not match the RAPID corresponding to the random access preamble transmitted by the terminal apparatus 200 (S2423: No), the terminal apparatus 200 proceeds to S2427 without proceeding to step S2425.

In step S2427, the terminal apparatus 200 determines whether the "E" field has a value of 0 or not. In a case where the "E" field has a value of 0 (S2427: Yes), the terminal apparatus 200 proceeds to step S2429. In a case where the "E" field has a value of 1 instead of 0 (S2427: No), the terminal apparatus 200 proceeds to step S2411.

In step S2429, the terminal apparatus 200 determines whether the ordinal position of the RAPID subheader has been calculated or not. In a case where the ordinal position of the RAPID subheader has been calculated (S2429: Yes), the terminal apparatus 200 identifies, as the MAC random access response (RAR) of the terminal itself (terminal apparatus 200), a MAC random access response (RAR) at the same ordinal position as that of the RAPID subheader (step S2431), and proceeds to step S2433. On the other hand, in a case where the ordinal position of the RAPID subheader has not been calculated (S2429: No), the terminal apparatus 200 terminates the processing illustrated in Fig. 24.

In step S2433, the terminal apparatus 200 determines whether the terminal itself (terminal apparatus 200) is to be notified of the UTBI or not. In a case where the terminal apparatus 200 is to be notified of the UTBI (S2433: Yes), the terminal apparatus 200 identifies, as the UTBI of the terminal itself (terminal apparatus 200), a UTBI at the same ordinal position as that of the RAPID subheader (step S2435) and terminates the processing illustrated in Fig. 24. On the other hand, in a case where the terminal apparatus 200 is not to be notified of the UTBI (S2433: No), the terminal apparatus 200 terminates the processing illustrated in Fig. 24 instead of proceeding to step S2435.

### «5. Second Example Embodiment»

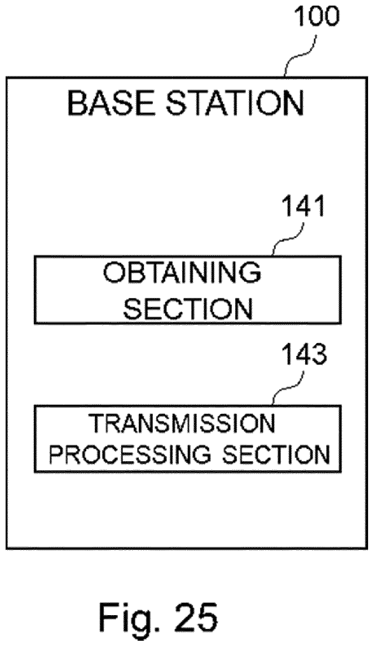

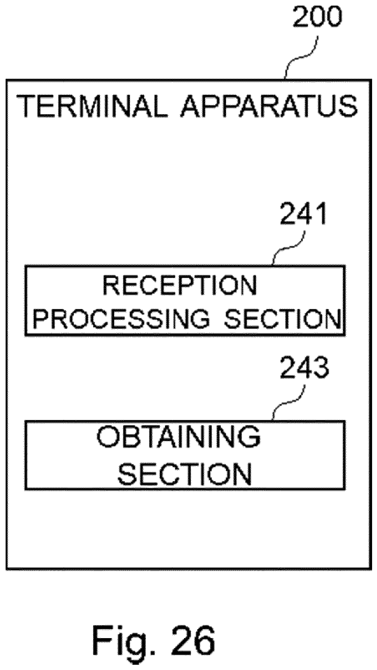

Now, a description will be given of a second example embodiment of the present invention with reference to Fig. 25 and Fig. 26. The above-described first example embodiment is a concrete example embodiment, whereas the first example embodiment is a more generalized example embodiment.

### <5.1. Configuration of Base Station>

With reference to Fig. 25, a description will be given of an example of a configuration of a base station 100 according to the second example embodiment. Fig. 25 is a block diagram illustrating an example of a schematic configuration of the base station 100 according to the second example embodiment. With reference to Fig. 25, the base station 100 includes an obtaining section 141 and a transmission processing section 143.

Specific operations of the obtaining section 141 and the transmission processing section 143 will be described later in detail.

The obtaining section 141 and the transmission processing section 143 may be implemented with a baseband (BB) processor and/or a different processor, and the like. The obtaining section 141 and the transmission processing section 143 may be implemented with the same processor or may be implemented with separate processors.

The base station 100 may include a memory configured to store a program and one or more processors that can execute the program, and the one or more processors may perform operations of the obtaining section 141 and the transmission processing section 143. The program may be a program for causing the one or more processors to perform the operations of the obtaining section 141 and the transmission processing section 143.

### <5.2. Configuration of Terminal Apparatus>

With reference to Fig. 26, an example of a configuration of a terminal apparatus 200 according to the second example embodiment will be described. Fig. 26 is a block diagram illustrating an example of a schematic configuration of the terminal apparatus 200 according to the second example embodiment. With reference to Fig. 26, the terminal apparatus 200 includes a reception processing section 241 and an obtaining section 243.

Concrete operations of the reception processing section 241 and the obtaining section 243 will be described later in detail.

The reception processing section 241 and the obtaining section 243 may be implemented with a baseband (BB) processor and/or a different processor, and the like. The reception processing section 241 and the obtaining section 243 may be implemented with the same processor or may be implemented with separate processors.

The terminal apparatus 200 may include a memory configured to store a program and one or more processors that can execute the program, and the one or more processors may perform operations of the reception processing section 241 and the obtaining section 243. The program may be a program for causing the one or more processors to perform the operations of the reception processing section 241 and the obtaining section 243.

### <5.3. Technical Features>

Next, technical features of the second example embodiment will be described. The above-described first example embodiment is a concrete example embodiment, whereas the second example embodiment is a more generalized example embodiment.

### - Base Station

The base station 100 (obtaining section 141) obtains a MAC PDU. The base station 100 (transmission processing section 143) then transmits the MAC PDU in downlink. The MAC PDU includes a plurality of identifiers and beam related information corresponding to each of one or more identifiers included in the plurality of identifiers and does not include beam related information corresponding to another identifier included in the plurality of identifiers.

### - Terminal Apparatus

The terminal apparatus 200 (reception processing section 241) receives the MAC PDU in downlink. The terminal apparatus 200 (obtaining section 243) obtains information included in the MAC PDU. In other words, the terminal apparatus 200 (obtaining section 243) obtains beam related information corresponding to an identifier included in the plurality of identifiers and used for the terminal apparatus 200.

As described above, the MAC PDU includes the beam related information corresponding to each of one or more identifiers included in the plurality of identifiers and does not include the beam related information corresponding to another identifier included in the plurality of identifiers. This enables the beam related information to be transmitted in downlink while reducing the use of radio resources.

### «6. Other Example Aspects»

Descriptions have been given above of the example embodiments of the present invention. However, the present invention is not limited to these example embodiments. It should be understood by those of ordinary skill in the art that these example embodiments are merely examples and that various alterations are possible without departing from the scope of the present disclosure.

For example, the steps in the processing described in the Specification may not be necessarily performed in the order described in the corresponding flowchart in time series. For example, the steps in the processing may be performed in an order different from the order described in the flowchart or in parallel. In addition, some of the steps in the processing may be deleted, or more steps may be added to the processing.

Furthermore, an apparatus including constituent elements of the base station described in the Specification (e.g., one or more apparatuses (or units) among a plurality of apparatuses (or units) constituting the base station or a module for one of the plurality of apparatuses (or units)) may be provided. An apparatus including the constituent elements of the terminal apparatus described in the Specification (e.g., a module for the terminal apparatus) may be provided. Moreover, methods including processing of the constituent elements may be provided, and programs for causing a processor to execute the processing of the constituent elements may be provided. Moreover, non-transitory computer-readable recording media (non-transitory computer readable media) in which the programs are recorded may be provided. It is apparent that such apparatuses, methods, programs, and non-transitory computer-readable recording media are also included in the present invention.

### Industrial Applicability

In a mobile communication system, beam related information can be transmitted in downlink with the use of reduced radio resources.

### Reference Signs List

- 1: System
- 100: Base Station
- 131, 233, 241: Reception Processing Section
- 133, 141, 235, 243: Obtaining Section
- 135, 143, 231: Transmission Processing Section
- 200: Terminal Apparatus

## Claims

1. A base station (100) comprising:
an obtaining section (133) configured to obtain a Medium Access Control, MAC, Protocol Data Unit, PDU; and
a transmission processing section configured to transmit the MAC PDU in downlink, wherein
the MAC PDU includes a plurality of identifiers and beam related information corresponding to each of one or more identifiers included in the plurality of identifiers and does not include beam related information corresponding to another identifier included in the plurality of identifiers , in order to allow a terminal apparatus (200) to obtain beam related information corresponding to an identifier used for the terminal apparatus (200) out of the plurality of identifiers in a case where the identifier used for the terminal apparatus (200) is included in the one or more identifiers,
the MAC PDU further includes a MAC header,
the MAC header includes a first region in which the plurality of identifiers is arranged and a second region in which the beam related information corresponding to each of the one or more identifiers is arranged,
the one or more identifiers are arranged ahead of the another identifier in the first region,
the MAC PDU includes data corresponding to each of the plurality of identifiers and a MAC payload, and
the MAC payload includes a data region in which the data corresponding to each of the plurality of identifiers is arranged.

2. The base station (100) according to claim 1, wherein
the plurality of identifiers is N, N ≥ 2, identifiers,
the MAC PDU includes the beam related information corresponding to each of M, 1 ≤M< N, identifiers included in the plurality of identifiers,
the MAC header includes the second region in which the beam related information corresponding to each of the M identifiers is arranged, and
m-th, 1 ≤ m ≤ M, beam related information in an order within the second region corresponds to an m-th identifier in an order within the first region.

3. The base station (100) according to claim 1 or 2, wherein
each of the plurality of identifiers is included in a first type of subheader in the MAC header, and
the beam related information corresponding to each of the one or more identifiers is included in a second type of subheader in the MAC header.

4. The base station (100) according to claim 3, wherein
the first type of subheader includes first indication information, and
the second type of subheader includes second indication information different from the first indication information.

5. The base station (100) according to claim 4, wherein
the MAC header includes a third type of subheader, and
the third type of subheader includes third indication information different from the first indication information and the second indication information.

6. The base station (100) according to claim 4, wherein the second region includes a subheader that is located behind a first subheader in the MAC header.

7. The base station (100) according to claim 6, wherein
the MAC header includes a third type of subheader, and
the third type of subheader includes the second indication information, and
the third type of subheader is the first subheader in the MAC header.

8. The base station (100) according to any one of claims 5 to 7, wherein the third type of subheader includes a backoff indicator.

9. A terminal apparatus (200) comprising:
a reception processing section configured to receive a Medium Access Control, MAC, Protocol Data Unit, PDU, in downlink; and
an obtaining section (243) configured to obtain information included in the MAC PDU, wherein
the MAC PDU includes a plurality of identifiers and beam related information corresponding to each of one or more identifiers included in the plurality of identifiers and does not include beam related information corresponding to another identifier included in the plurality of identifiers,
the MAC PDU further includes a MAC header,
the MAC header includes a first region in which the plurality of identifiers is arranged and a second region in which the beam related information corresponding to each of the one or more identifiers is arranged, and
the one or more identifiers are arranged ahead of the another identifier in the first region,
the MAC PDU includes data corresponding to each of the plurality of identifiers and a MAC payload, and
the MAC payload includes a data region in which the data corresponding to each of the plurality of identifiers is arranged, and
the obtaining section (243) is configured to obtain beam related information corresponding to an identifier used for the terminal apparatus (200) out of the plurality of identifiers in a case where the identifier used for the terminal apparatus (200) is included in the one or more identifiers.

10. A method for a base station (100), the method comprising:
obtaining a Medium Access Control, MAC,) Protocol Data Unit, PDU; and
transmitting the MAC PDU in downlink, wherein
the MAC PDU includes a plurality of identifiers and beam related information corresponding to each of one or more identifiers included in the plurality of identifiers and does not include beam related information corresponding to another identifier included in the plurality of identifiers, in order to allow a terminal apparatus (200) to obtain beam related information corresponding to an identifier used for the terminal apparatus (200) out of the plurality of identifiers in a case where the identifier used for the terminal apparatus (200) is included in the one or more identifiers,
the MAC PDU further includes a MAC header,
the MAC header includes a first region in which the plurality of identifiers is arranged and a second region in which the beam related information corresponding to each of the one or more identifiers is arranged,
the one or more identifiers are arranged ahead of the another identifier in the first region,
the MAC PDU includes data corresponding to each of the plurality of identifiers and a MAC payload, and
the MAC payload includes a data region in which the data corresponding to each of the plurality of identifiers is arranged.

11. A method for a terminal apparatus (200), the method comprising:
receiving a Medium Access Control, MAC, Protocol Data Unit, PDU, in downlink; and
obtaining information included in the MAC PDU, wherein
the MAC PDU includes a plurality of identifiers and beam related information corresponding to each of one or more identifiers included in the plurality of identifiers and does not include beam related information corresponding to another identifier included in the plurality of identifiers, and
the MAC PDU further includes a MAC header,
the MAC header includes a first region in which the plurality of identifiers is arranged and a second region in which the beam related information corresponding to each of the one or more identifiers is arranged,
the MAC PDU includes data corresponding to each of the plurality of identifiers and a MAC payload, and
the MAC payload includes a data region in which the data corresponding to each of the plurality of identifiers is arranged
the one or more identifiers are arranged ahead of the another identifier in the first region,
beam related information corresponding to an identifier used for the terminal apparatus (200) is obtained out of the plurality of identifiers in a case where the identifier used for the terminal apparatus (200) is included in the one or more identifiers.

## Patentansprüche

1. Basisstation (100), mit:
einem Erfassungsabschnitt (133), der dafür konfiguriert ist, eine MAC-Medium Access Control, Protokolldateneinheit, PDU, zu erhalten; und
einem Übertragungsverarbeitungsabschnitt, der dafür konfiguriert ist, die MAC-PDU im Downlink zu übertragen, wobei die MAC-PDU mehrere Identifizierungen und strahlbezogene Information enthält, die jeweils einer oder mehreren Identifizierungen entspricht, die in den mehreren Identifizierungen enthalten sind, und keine strahlbezogene Information enthält, die einer anderen Identifizierung entspricht, die in den mehreren Identifizierungen enthalten ist, um es einem Endgerät (200) zu ermöglichen, strahlbezogene Information, die einer für das Endgerät (200) verwendeten Identifizierung entspricht, aus den mehreren Identifizierungen in einem Fall zu erhalten, in dem die für das Endgerät (200) verwendete Identifizierung in der einen oder in den mehreren Identifizierungen enthalten ist,
wobei die MAC-PDU ferner einen MAC-Header enthält,
der MAC-Header einen ersten Bereich aufweist, in dem die mehreren Identifizierungen angeordnet sind, und einen zweiten Bereich, in dem die strahlbezogene Information angeordnet ist, die jeder unter der einen oder den mehreren Identifizierungen entspricht,
die eine oder die mehreren Identifizierungen vor der anderen Identifizierung im ersten Bereich angeordnet sind,
die MAC-PDU Daten, die jeder der mehreren Identifizierungen entsprechen, und MAC-Nutzdaten aufweist, und
die MAC-Nutzdaten einen Datenbereich aufweisen, in dem die jeder der mehreren Identifizierungen entsprechenden Daten angeordnet sind.

2. Basisstation (100) nach Anspruch 1, wobei
die mehreren Identifizierungen N, N ≥ 2, Identifizierungen sind,
die MAC-PDU die strahlbezogene Information enthält, die jeder von M, 1 ≤ M ≤ N, Identifizierungen entspricht, die in den mehreren Identifizierungen enthalten sind,
der MAC-Header den zweiten Bereich enthält, in dem die strahlbezogene Information angeordnet ist, die jedem der M Identifizierungen entspricht, und
m-te, 1 ≤ m ≤ M, strahlbezogene Information in einer Folge innerhalb des zweiten Bereichs einer m-ten Identifizierung in einer Folge innerhalb des ersten Bereichs entspricht.

3. Basisstation (100) nach Anspruch 1 oder 2, wobei
jede der mehreren Identifizierungen in einem ersten Subheader-Typ im MAC-Header enthalten ist, und
die strahlbezogene Information, die jeder unter der einen oder den mehreren Identifizierungen entspricht, in einem zweiten Subheader-Typ im Header enthalten ist.

4. Basisstation (100) nach Anspruch 3, wobei
der erste Subheader-Typ erste Anzeigeinformation enthält, und
der zweite Subheader-Typ zweite Anzeigeinformation enthält, die sich von der ersten Anzeigeinformation unterscheidet.

5. Basisstation (100) nach Anspruch 4, wobei
der MAC-Header einen dritten Subheader-Typ enthält, und der dritte Subheader-Typ dritte Anzeigeinformation enthält, die sich von der ersten Anzeigeinformation und der zweiten Anzeigeinformation unterscheidet.

6. Basisstation (100) nach Anspruch 4, wobei
der zweite Bereich einen Subheader enthält, der hinter einem ersten Subheader im MAC-Header angeordnet ist.

7. Basisstation (100) nach Anspruch 6, wobei
der MAC-Header einen dritten Subheader-Typ enthält, und
der dritte Subheader-Typ die zweite Anzeigeinformation enthält, und
der dritte Subheader-Typ der erste Subheader im MAC-Header ist.

8. Basisstation (100) nach einem der Ansprüche 5 bis 7, wobei der dritte Subheader-Typ einen Backoff-Indikator enthält.

9. Endgerät (200), mit:
einem Empfangsverarbeitungsabschnitt, der dafür konfiguriert ist, eine MAC-, Medium Access Control, Protokolldateneinheit, PDU, im Downlink zu empfangen; und
einem Erfassungsabschnitt (243), der dafür konfiguriert ist, Information zu erhalten, die in der MAC-PDU enthalten ist, wobei
die MAC-PDU mehrere Identifizierungen und strahlbezogene Information enthält, die jeder unter einer oder mehreren Identifizierungen entspricht, die in den mehreren Identifizierungen enthalten sind, und keine strahlbezogene Information enthält, die einer anderen Identifizierung entspricht, die in den mehreren Identifizierungen enthalten ist,
die MAC-PDU ferner einen MAC-Header enthält,
der MAC-Header einen ersten Bereich aufweist, in dem die mehreren Identifizierungen angeordnet sind, und einen zweiten Bereich, in dem die strahlbezogene Information angeordnet ist, die jeder unter der einen oder den mehreren Identifizierungen entspricht,
die eine oder die mehreren Identifizierungen vor der anderen Identifizierung im ersten Bereich angeordnet sind,
die MAC-PDU Daten, die jeder unter den mehreren Identifizierungen entsprechen, und MAC-Nutzdaten enthält, und
die MAC-Nutzdaten einen Datenbereich enthalten, in dem die Daten angeordnet sind, die jeder der mehreren Identifizierungen entsprechen, und
der Erfassungsabschnitt (243) dafür konfiguriert ist, strahlbezogene Information, die einer für das Endgerät (200) verwendeten Identifizierung unter den mehreren Identifizierungen entspricht, in einem Fall zu erhalten, in dem die für das Endgerät (200) verwendete Identifizierung in der einen oder in den mehreren Identifizierungen enthalten ist.

10. Verfahren für eine Basisstation (100), wobei das Verfahren die Schritte aufweist:
Erhalten einer MAC-, Medium Access Control, Protokolldateneinheit, PDU; und
Übertragen der MAC-PDU im Downlink, wobei
die MAC-PDU mehrere Identifizierungen und strahlbezogene Information enthält, die jeder unter einem oder mehreren Identifizierungen entspricht, die in den mehreren Identifizierungen enthalten sind, und keine strahlbezogene Information enthält, die einer anderen Identifizierung entspricht, die in den mehreren Identifizierungen enthalten ist, um es einem Endgerät (200) zu ermöglichen, strahlbezogene Information, die einer Identifizierung entspricht, die für das Endgerät (200) verwendet wird, unter den mehreren Identifizierungen in einem Fall zu erhalten, in dem die für das Endgerät (200) verwendete Identifizierung in der einen oder in den mehreren Identifizierungen enthalten ist,
die MAC-PDU ferner einen MAC-Header enthält,
der MAC-Header einen ersten Bereich aufweist, in dem die mehreren Identifizierungen angeordnet sind, und einen zweiten Bereich, in dem die strahlbezogene Information angeordnet ist, die jeder unter der einen oder den mehreren Identifizierungen entspricht,
die eine oder die mehreren Identifizierungen vor der anderen Identifizierung im ersten Bereich angeordnet sind,
die MAC-PDU Daten, die jeder unter den mehreren Identifizierungen entsprechen, und MAC-Nutzdaten enthält, und
die MAC-Nutzdaten einen Datenbereich enthalten, in dem die Daten angeordnet sind, die jeder der mehreren Identifizierungen entsprechen.

11. Verfahren für ein Endgerät (200), wobei das Verfahren die Schritte aufweist:
Empfangen einer MAC-, Medium Access Control, Protokolldateneinheit, PDU, im Downlink; und
Erhalten von Information, die in der MAC-PDU enthalten ist, wobei die MAC-PDU mehrere Identifizierungen und strahlbezogene Information enthält, die jeder unter einer oder mehreren Identifizierungen entspricht, die in den mehreren Identifizierungen enthalten sind, und keine strahlbezogene Information enthält, die einer anderen Identifizierung entspricht, die in den mehreren Identifizierungen enthalten ist,
die MAC-PDU ferner einen MAC-Header enthält,
der MAC-Header einen ersten Bereich aufweist, in dem die mehreren Identifizierungen angeordnet sind, und einen zweiten Bereich, in dem die strahlbezogene Information angeordnet ist, die jeder unter der einen oder den mehreren Identifizierungen entspricht,
die MAC-PDU Daten, die jeder unter den mehreren Identifizierungen entsprechen, und MAC-Nutzdaten enthält, und
die MAC-Nutzdaten einen Datenbereich enthalten, in dem die Daten angeordnet sind, die jeder der mehreren Identifizierungen entsprechen,
die eine oder die mehreren Identifizierungen vor der anderen Identifizierung im ersten Bereich angeordnet sind, und
strahlbezogene Information, die einer für das Endgerät (200) verwendeten Identifizierung entspricht, aus den mehreren Identifizierungen in einem Fall erhalten werden, in dem die für das Endgerät (200) verwendete Identifizierung in der einen oder in den mehreren Identifizierungen enthalten ist.

## Revendications

1. Station de base (100) comprenant:
une section d'obtention (133) configurée pour obtenir une unité de données de protocole, PDU, de commande d'accès au support, MAC; et
une section de traitement de transmission configurée pour transmettre la PDU MAC en liaison descendante, dans laquelle
la PDU MAC comprend une pluralité d'identifiants et des informations relatives au faisceau correspondant à chacun parmi un ou plusieurs identifiants compris dans la pluralité d'identifiants et ne comprend pas d'informations relatives au faisceau correspondant à un autre identifiant compris dans la pluralité d'identifiants, afin de permettre à un appareil terminal (200) d'obtenir des informations relatives au faisceau correspondant à un identifiant utilisé pour l'appareil terminal (200) parmi la pluralité d'identifiants dans un cas où l'identifiant utilisé pour l'appareil terminal (200) est compris dans les un ou plusieurs identifiants,
la PDU MAC comprend en outre un en-tête MAC,
l'en-tête MAC comprend une première région dans laquelle la pluralité d'identifiants sont agencés et une deuxième région dans laquelle les informations relatives au faisceau correspondant à chacun parmi les un ou plusieurs identifiants sont agencées,
les un ou plusieurs identifiants sont agencés devant l'autre identifiant dans la première région,
la PDU MAC comprend des données correspondant à chacun parmi la pluralité d'identifiants et une charge utile MAC, et
la charge utile MAC comprend une région de données dans laquelle les données correspondant à chacun parmi la pluralité d'identifiants sont agencées.

2. Station de base (100) selon la revendication 1, dans laquelle
la pluralité d'identifiants est N, N ≥ 2, identifiants,
la PDU MAC comprend les informations relatives au faisceau correspondant à chacun parmi M, 1 ≤ M < N, identifiants compris dans la pluralité d'identifiants,
l'en-tête MAC comprend la deuxième région dans laquelle les informations relatives au faisceau correspondant à chacun parmi les M identifiants sont agencées, et
une m-ième, 1 ≤ m ≤ M, information relative au faisceau dans un ordre à l'intérieur de la deuxième région correspond à un m-ième identifiant dans un ordre à l'intérieur de la première région.

3. Station de base (100) selon la revendication 1 ou 2, dans laquelle
chacun parmi la pluralité d'identifiants est compris dans un premier type de sous-en-tête dans l'en-tête MAC, et
les informations relatives au faisceau correspondant à chacun parmi les un ou plusieurs identifiants sont comprises dans un deuxième type de sous-en-tête dans l'en-tête MAC.

4. Station de base (100) selon la revendication 3, dans laquelle
le premier type de sous-en-tête comprend des premières informations d'indication, et
le deuxième type de sous-en-tête comprend des deuxièmes informations d'indication différentes des premières informations d'indication.

5. Station de base (100) selon la revendication 4, dans laquelle
l'en-tête MAC comprend un troisième type de sous-en-tête, et
le troisième type de sous-en-tête comprend des troisièmes informations d'indication différentes des premières informations d'indication et des deuxièmes informations d'indication.

6. Station de base (100) selon la revendication 4, dans laquelle la deuxième région comprend un sous-en-tête qui est situé derrière un premier sous en-tête dans l'en-tête MAC.

7. Station de base (100) selon la revendication 6, dans laquelle
l'en-tête MAC comprend un troisième type de sous-en-tête, et
le troisième type de sous-en-tête comprend les deuxièmes informations d'indication, et
le troisième type de sous-en-tête est le premier sous-en-tête dans l'en-tête MAC.

8. Station de base (100) selon l'une quelconque des revendications 5 à 7, dans laquelle le troisième type de sous-en-tête comprend un indicateur de délai d'attente.

9. Appareil terminal (200) comprenant:
une section de traitement de réception configurée pour recevoir une unité de données de protocole, PDU, de commande d'accès au support, MAC, en liaison descendante; et
une section d'obtention (243) configurée pour obtenir des informations comprises dans la PDU MAC, dans lequel
la PDU MAC comprend une pluralité d'identifiants et des informations relatives au faisceau correspondant à chacun parmi un ou plusieurs identifiants compris dans la pluralité d'identifiants et ne comprend pas d'informations relatives au faisceau correspondant à un autre identifiant compris dans la pluralité d'identifiants,
la PDU MAC comprend en outre un en-tête MAC,
l'en-tête MAC comprend une première région dans laquelle la pluralité d'identifiants sont agencés et une deuxième région dans laquelle les informations relatives au faisceau correspondant à chacun parmi les un ou plusieurs identifiants sont agencées, et
les un ou plusieurs identifiants sont agencés devant l'autre identifiant dans la première région,
la PDU MAC comprend des données correspondant à chacun parmi la pluralité d'identifiants et une charge utile MAC, et
la charge utile MAC comprend une région de données dans laquelle les données correspondant à chacun parmi la pluralité d'identifiants sont agencées, et
la section d'obtention (243) est configurée pour obtenir des informations relatives au faisceau correspondant à un identifiant utilisé pour l'appareil terminal (200) parmi la pluralité d'identifiants dans un cas où l'identifiant utilisé pour l'appareil terminal (200) est compris dans les un ou plusieurs identifiants.

10. Procédé pour une station de base (100), le procédé comprenant:
l'obtention d'une unité de données de protocole, PDU, de commande d'accès au support, MAC; et
la transmission de la PDU MAC en liaison descendante, dans lequel
la PDU MAC comprend une pluralité d'identifiants et des informations relatives au faisceau correspondant à chacun parmi un ou plusieurs identifiants compris dans la pluralité d'identifiants et ne comprend pas d'informations relatives au faisceau correspondant à un autre identifiant compris dans la pluralité d'identifiants, afin de permettre à un appareil terminal (200) d'obtenir des informations relatives au faisceau correspondant à un identifiant utilisé pour l'appareil terminal (200) parmi la pluralité d'identifiants dans un cas où l'identifiant utilisé pour l'appareil terminal (200) est compris dans les un ou plusieurs identifiants,
la PDU MAC comprend en outre un en-tête MAC,
l'en-tête MAC comprend une première région dans laquelle la pluralité d'identifiants sont agencés et une deuxième région dans laquelle les informations relatives au faisceau correspondant à chacun parmi les un ou plusieurs identifiants sont agencées,
les un ou plusieurs identifiants sont agencés devant l'autre identifiant dans la première région,
la PDU MAC comprend des données correspondant à chacun parmi la pluralité d'identifiants et une charge utile MAC, et
la charge utile MAC comprend une région de données dans laquelle les données correspondant à chacun parmi la pluralité d'identifiants sont agencées.

11. Procédé pour un appareil terminal (200), le procédé comprenant:
la réception d'une unité de données de protocole, PDU, de commande d'accès au support, MAC, en liaison descendante; et
l'obtention d'informations comprises dans la PDU MAC, dans lequel
la PDU MAC comprend une pluralité d'identifiants et des informations relatives au faisceau correspondant à chacun parmi un ou plusieurs identifiants compris dans la pluralité d'identifiants et ne comprend pas d'informations relatives au faisceau correspondant à un autre identifiant compris dans la pluralité d'identifiants, et
la PDU MAC comprend en outre un en-tête MAC,
l'en-tête MAC comprend une première région dans laquelle la pluralité d'identifiants sont agencés et une deuxième région dans laquelle les informations relatives au faisceau correspondant à chacun parmi les un ou plusieurs identifiants sont agencées,
la PDU MAC comprend des données correspondant à chacun parmi la pluralité d'identifiants et une charge utile MAC, et
la charge utile MAC comprend une région de données dans laquelle les données correspondant à chacun parmi la pluralité d'identifiants sont agencées,
les un ou plusieurs identifiants sont agencés devant l'autre identifiant dans la première région,
des informations relatives au faisceau correspondant à un identifiant utilisé pour l'appareil terminal (200) sont obtenues parmi la pluralité d'identifiants dans un cas où l'identifiant utilisé pour l'appareil terminal (200) est compris dans les un ou plusieurs identifiants.
